(19) **Europäisches Patentamt / European Patent Office / Office européen des brevets**

(11) **EP 4 726 846 A1**

(12) **EUROPEAN PATENT APPLICATION**

(43) Date of publication:
**15.04.2026 Bulletin 2026/16**

(21) Application number: **24205864.2**

(22) Date of filing: **10.10.2024**

(51) International Patent Classification (IPC):
**H01M 10/42** (2006.01)  **B60L 58/18** (2019.01)
**G01R 19/165** (2006.01)  **G01R 31/396** (2019.01)

(52) Cooperative Patent Classification (CPC):
**H01M 10/4207; B60L 58/18;** H01M 10/425;
H01M 2010/4271

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **LG Energy Solution, Ltd.**
**Seoul 07335 (KR)**

(72) Inventors:
- **CHOI, Jin Hyeong**
  **34122 Daejeon (KR)**
- **HONG, Jong Hyuk**
  **34122 Daejeon (KR)**
- **CHOI, Yong Joon**
  **34122 Daejeon (KR)**

(74) Representative: **Goddar, Heinz J.**
**Boehmert & Boehmert**
**Anwaltspartnerschaft mbB**
**Pettenkoferstrasse 22**
**80336 München (DE)**

(54) **BATTERY MODULE ASSEMBLY METHOD, AND BATTERY MODULE**

(57) The invention relates to a battery module assembly method, comprising: providing K battery cells (110), K being a first integer; calculating a respective voltage drop (VD) of the K battery cells (110) due to a respective self-discharge of each of the multiple battery cells (110); selecting N battery cells (110) from the K battery cells (110), N being a second integer smaller than the first integer K; determining an extreme battery cell from the N battery cells (110) that exhibits a maximum voltage drop from the voltage drops (VD), or that exhibits a minimum voltage drop from the voltage drops (VD); calculating a summary statistic (M) as function of the voltage drops of the N battery cells (110) except for the extreme battery cell; calculating an A-value (A) of the N battery cells as function of the calculated summary statistic (M) and the voltage drop (VD) of the extreme battery cell; and if the A-value (A) is larger than a preset threshold ($A_T$), removing the extreme battery cell from the N battery cells (110) and adding an alternative battery cell from the K battery cells (110) such that the N battery cells comprise the alternative battery cell and the N battery cells except for the extreme battery cell, wherein a second A-value ($\Lambda$) as calculated as function of the measure (M) and the voltage drop (VD) of the alternative battery cell is smaller than the preset threshold ($A_T$). The invention further relates to a battery module (100).

providing K battery cells

determining an initial cell voltage of each of the K battery cells

determining a final cell voltage of each of the K battery cells

calculating a voltage drop of the K battery cells

selecting N battery cells of the K battery cells

determining an exterme battery cell form the N battery cells

calculating a measure of the N battery cells except the extreme battery cell

calculating an A-value

If the A-vaule is larger than a preset threshold, removing the extreme battery cell from the N battery cells and adding an alternative battery cell

Fig. 1

## Description

TECHNICAL FIELD

The invention relates to a battery module assembly method, and a battery module.

BACKGROUND

Battery packs, as used e.g. for electronic vehicles (EV) or electronic devices such as consumer electronics, comprise multiple battery modules. Each battery module comprises multiple battery cells.

Often, individual battery cells of the same type and/or model may have differing characteristics and properties, even if they are manufactured by the same process and/or the same manufacturer. Hence, a battery module assembled from battery cells may deviate more or less from specifications. These deviations may reduce the quality of a corresponding battery module and/or battery pack.

In particular, when the battery cells contained in a battery module differ too much, the battery module may be defective or otherwise impaired, fail quality tests and/or deviate too much from given specifications. Such battery modules may be called no-good (NG) battery modules.

For instance, when voltage drops, such as e.g. voltage decays or voltage decreases over time, of battery cells in a battery module differ and/or deviate to much from each other, the battery module may be a no-good battery module.

A particular quality criterion may be the mV/day Delta, which may be related or correspond to a voltage reduction for a specific time period for each bank of a battery module. When the deviations of the battery cells in the battery module are large, the mV/day delta may be increased, leading to a no-good battery module.

SUMMARY OF THE INVENTION

It is thus an objective of the invention to provide a method for assembling a battery module which has a good quality, and to provide a corresponding battery module. In particular, the battery cells of the battery module may have more homogeneous voltage drops and/or deviate less in terms of voltage drop. Further, the method according to the invention can be carried out quickly and is easy to use. In particular, the method according to the invention may require a determination of only one voltage drop for each battery cell, and/or only two voltage measurements per battery cell.

It is a further objective of the invention to improve production efficiency by preventing and/or reducing potential mV/day Delta no-good battery modules.

These objectives are achieved by a battery module assembly method according to claim 1, and a battery module according to claim 12. The dependent claims relate to further examples.

A first aspect of the invention relates to a battery module assembly method, comprising:

providing K battery cells, K being a first integer;

calculating a respective voltage drop of the K battery cells due to a respective self-discharge of each of the multiple battery cells;

selecting N battery cells from the K battery cells, N being a second integer smaller than the first integer K;

determining an extreme battery cell from the N battery cells that exhibits a maximum voltage drop from the voltage drops, or that exhibits a minimum voltage drop from the voltage drops;

calculating a summary statistic as function of the voltage drops of the N battery cells except for the extreme battery cell;

calculating an A-value of the N battery cells as function of the calculated summary statistic and the voltage drop of the extreme battery cell; and

if the A-value is larger than a preset threshold, removing the extreme battery cell from the N battery cells and adding an alternative battery cell from the K battery cells to the N battery cells such that the N battery cells comprise the alternative battery cell except for the extreme battery cell, wherein a second A-value as calculated as function of the summary statistic and the voltage drop of the alternative battery cell is smaller than the preset threshold.

Herein, the terms "battery cell", "battery module" and/or "battery pack" may be used in accordance with the teachings of electrochemical energy storage.

A battery cell may be or may comprise a primary battery cell. Alternatively or additionally, a battery cell may be or may comprise a secondary battery cell. A battery module may be or may comprise one or more primary battery cells, and/or may be or may comprise a primary battery module. Alternatively or additionally, a battery module may be or may comprise one or more secondary battery cells, and/or may be or may comprise a secondary battery module. A battery pack may be or may comprise one or more primary battery cells and/or one or more primary battery modules, and/or may be or may comprise a primary battery pack. Alternatively or additionally, a battery pack may be or may comprise one or more secondary battery cells and/or one or more secondary battery modules, and/or may be or may comprise a secondary battery pack.

A primary battery cell, primary battery module and/or primary battery pack may be designed to be used and/or charged once. A secondary battery cell, secondary battery module and/or secondary battery pack may be designed to be used multiple times and/or be charged multiple times. In particular, a secondary battery cell, a secondary battery module and/or a secondary battery pack may be rechargeable.

A battery cell may comprise a positive electrode, a negative electrode, and a separator. At least one electrode of the battery cell may be or may comprise a cathode. At least one electrode of the battery cell may be or may comprise an anode. The electrodes may be arranged within a container. The electrode may be arranged alongside the separator. The separator may divide the container such that the electrodes, e.g. the anode and the cathode, do not come into immediate contact with one another so as to avoid a short circuit. The container may be filled with an electrolyte solution, which may allow ions to pass between the electrodes. For instance, ions may pass from the cathode to the anode when releasing electrical energy. For instance, ions may pass from the anode to the cathode when storing electrical energy.

Without loss of generality, the battery cell as used herein may refer to a pouchtype battery cell, a prismatic battery cell or a cylindrical battery cell. However, the method is not necessarily limited to a specific type of battery cell.

A battery module may comprise a specific number of battery cells. A battery module may comprise at least two or more battery cells. It may be provided that two or more battery cells may form a battery module, and/or may be part of a battery module. Two or more battery cells may be packaged together in a battery module, e.g. in a same housing or frame of the battery module. A battery module may be an intermediate product for manufacturing a battery pack.

A battery pack may be or may comprise at least two or more battery modules. A battery pack may comprise a battery management system. Battery packs may be used e.g. in electronic vehicles (EV), electronic devices, consumer electronics, power tools, energy storage, and the like.

A voltage drop may mean or describe a difference of voltage as determined or measured at two different points in time. A voltage drop of a battery cell may correspond to a difference of the voltage of a respective battery cell at two different points in time. Determining a voltage of a battery cell may include one or more of determining, measuring, registering, recording, sensing, and/or retrieving the voltage of a battery cell, e.g. at a point in time. Determining a voltage drop of a battery cell may include one or more of determining, measuring, registering, recording, sensing, and/or retrieving the voltage of a battery cell at two different points in time. Between two different points in time, there may be a time gap and/or time interval, such that the two points in time may not coincide in time. Determining a voltage drop of a battery cell may include determining the voltage of said battery cell at one point in time, waiting, and then determining the voltage of said battery cell at a point in time later than the one point in time.

"Determining" may include one or more of measuring, sensing, quantifying, gauging, metering, detecting, capturing, registering, recording, storing, and the like, for example, without being exhaustive. "Determining" may include taking and/or performing a measurement. Suitable devices and/or methods may be employed and/or used, as understood by the person skilled in the art.

A voltage drop of a battery cell may mean, may be or may include a voltage decay over time of a battery cell. A voltage drop of a battery cell may mean, may be or may include a voltage decline and/or voltage decrease over time of a battery cell.

It may be provided that the voltage of the battery cell may be or may comprise an open circuit voltage. The voltage drop of a battery cell may be or may comprise a difference in open circuit voltage of the battery cell as determined at two different corresponding points in time. However, the voltage of the battery cell is not necessarily limited to the open circuit voltage, and/or the voltage drop may be defined differently, without necessarily being limited thereto.

Providing K battery cells may include manufacturing K battery cells. Providing K battery cells may include assembling K battery cells from parts. Providing K battery cells may include providing K battery cells from storage. Providing K battery cells may include selecting K battery cells from number of battery cells larger than K. Providing K battery cells may include selecting K battery cells from a pool of battery cells. "Providing K battery cells" may include one or more of manufacturing, selecting, choosing, supplying, procuring, acquiring, repairing, refurbishing and/or upcycling a number K of battery cells, but is not necessarily limited thereto.

The K battery cells may be provided, selected or chosen e.g. according to some specifications, such as type or model of the battery cells. The specification may be given or determined by a battery module to be assembled from the battery cells. The specification may be due to a use case, or technical requirements of a battery module to be assembled. Alternatively or additionally, the K battery cells may be e.g. manufactured according to a same specification. However, the K battery cells are not limited to these examples.

The first integer number K may be equal to the sum of the second integer number N and another integer number larger than zero. For instance, the second integer number K may be equal to N + 1, or may be larger than N + 1.

Selecting N battery cells may include choosing randomly N battery cells from the K battery cells. Selecting N battery cells may include choosing the first N battery cells from the K battery cells. Selecting N battery cells may include choosing the last N battery cells from the K battery cells. Selecting N battery cells may include choosing N battery cells from the K battery cells according to a given scheme or a given criterion. Other ways of choosing N battery cells from the K battery cells are possible. The selection of the N battery cells is not limited to these examples.

Determining an extreme battery cell may include comparing the voltage drops of all N battery cells. Determining an extreme battery cell may include ranking the voltage drops of all N battery cells. Determining an extreme battery cell may include sorting the voltage drops of all N battery cells, e.g. by the value of the voltage drops.

The summary statistic may be or may comprise a characteristic of the voltage drop of the battery cells except for the extreme battery cell. The summary statistic may summarize the voltage drop of the N battery cells except for the extreme battery cell. The summary statistic may be or may comprise a measure of the voltage drop of the N battery cells except for the extreme battery cell. Calculating the summary statistic may include calculating one or more summary statistics, such as e.g. (but not necessarily limited to) one or more of a mean, a median, a mode, a standard deviation, a variance, an average distance, a central moment (such as e.g. a skewness and/or a flatness), a non-central moment, a distance metric or the like.

The A-value may be characteristic for a deviation of the extreme battery cell from the other battery cells. The A-value may be characteristic for a deviation of the extreme battery cell from the N battery cells except the extreme battery cell. The A-value may be calculated such that the higher the A-value, the larger the deviation. For instance but not necessarily limited thereto, the deviation may be equal and/or proportional to the difference of the voltage drop of the extreme battery cell and the summary statistic, or its absolute value. However, the deviation and/or its definition, and/or the A-value, may be defined and/or calculated differently.

The preset threshold may be or may comprise a preset, predetermined, selected, and/or chosen value. The preset threshold may have the same unit, e.g. the same unit of measurement, as the A-value and/or the second A-value. Depending on the preset threshold, for a specific A-value an extreme battery cell might be replaced or not. Depending on the preset threshold, the battery module may have battery cells with a specific or chosen homogeneity of voltage drops. Depending on the preset threshold, the voltage drops of battery cells of a battery module may vary more or less.

The preset threshold may be preset, predetermined, selected, and/or chosen such that the difference and/or deviation between voltage drops of respective battery cells may be within a preset, desired, selected or chosen range. The preset threshold may be preset, predetermined, selected, and/or chosen such that the difference and/or deviation between voltage drops of respective battery cells may smaller than a preset, desired, selected or chosen value.

The second A-value may be characteristic for a deviation of the alternative battery cell from the other battery cells. The second A-value may be characteristic for a deviation of the alternative battery cell from the N battery cells except the extreme battery cell. The second A-value may be calculated such that the higher the second A-value, the larger the deviation. For instance but not necessarily limited thereto, the deviation may be equal and/or proportional to the difference of the voltage drop of the alternative battery cell and the summary statistic, or its absolute value. However, the deviation and/or its definition, and/or the second A-value, may be defined and/or calculated differently.

Thus, by replacing the extreme battery cell with the alternative battery cell, the deviation relative to the other non-replaced battery cells may be reduced.

Calculating may be or comprise computing one or more values. Calculating may include performing one or more mathematical operations, such as e.g. addition, subtraction, multiplication or division, or any other required mathematical operation. When calculating the summary statistic, any mathematical operations as required may be performed, e.g. depending on the chosen summary statistic, and/or depending on a formula or definition of the summary statistic. When calculating the A-value and/or the second A-value, any mathematical operations as required may be performed, e.g. depending on a formula or definition of the A-value and/or the second A-value.

Some or all steps of the method may be computer-implemented. In particular but not necessarily limited thereto, it may be provided that calculations may be carried out by a computer device, such as e.g. by a personal computer, a workstation, a server, a tablet, a smartphone, an integrated circuit, a FPGA or the like. As further example, it may be provided that e.g. selecting the N battery cells and/or determining the extreme battery cell is carried out by a or the computer device.

By replacing the extreme battery cell with a battery cell more in line with the other battery cells, the battery cells to be assembled to a battery module may be more homogeneous, at least in terms of voltage drop. Thus, the quality of a battery module to be assembled from the selected battery cells may be improved. Correspondingly, the quality of a battery module containing battery cells as selected by the method according to the invention may be improved.

A more homogeneous voltage drop of battery cells may include that differences of voltage drops between two or more of the battery cells are reduced. A more homogeneous battery module may include that differences of voltage drops between two or more of the battery cells of the battery module are reduced.

In at least one or more examples, before or when calculating a respective voltage drop of the K battery cells, the method may further comprise the steps of:

determining a respective initial cell voltage of each of the K battery cells;

and determining a respective final cell voltage of each of the K battery cells after a respective storage duration.

The initial cell voltage may be a voltage of the battery cell after manufacturing the battery cell. For instance, the battery cell may be charged after manufacturing, and the initial cell voltage may be the voltage of the battery cell after charging, e.g. immediately after charging. It may be provided to measure the voltage of the battery cell after charging and/or after manufacturing, wherein the initial cell voltage may be said measured voltage.

After manufacturing, the battery cell may be stored until it is used for assembling a battery module. The battery cells may experience or exhibit self-discharge, e.g. during storage.

The final cell voltage may be the voltage of a respective battery cell before assembling a battery module. For instance, the voltage of the battery cell may be measured before assembling a battery module, e.g. substantially immediately before assembling a battery module, and the final cell voltage may be the measured voltage.

The final cell voltage of each of the K battery cells may be determined after a respective storage duration. The voltage drop may be due to a self-discharge of the battery cell during storage.

Since the voltage drop is due to a self-discharge, it may not be required to monitor the battery cells, in particular their voltage, closely. As such, it can be sufficient to determine the voltage of a battery cell before assembling a battery module to determine the respective voltage drop. Alternatively or additionally, it can be sufficient to determine the voltage of a battery cell when providing and/or choosing the K battery cells to determine the respective voltage drop.

It may be provided that battery cells are stored for several days to several tens of days, before being selected for assembly of a battery module and/or before being selected to be in the K number of battery cells. It may be provided that the voltage drop of each of the K battery cells is determined when selecting and/or providing the K battery cells. It may be provided that the voltage drop of each of the K battery cells is determined when selecting and/or providing the K battery cells, but not before selecting and/or providing the K battery cells. In particular, there may be some, or all, battery cells in storage whose voltage drop has not been yet determined.

Determining the voltage drop between the initial cell voltage and the final cell voltage of the respective cells may be enough to carry out the method according to the invention. Determining the voltage drop between the initial cell voltage and the final cell voltage of the respective cells may be enough to obtain a more homogeneous battery module, even though the time in storage may differ for different battery cells. Determining the voltage drop between the initial cell voltage and the final cell voltage of the respective cells may be enough to obtain a more homogeneous battery module, even though the time delta between determining the initial cell voltage and the final cell voltage may differ for different battery cells.

Alternatively or additionally, it may be provided to determine the initial cell voltage and the final cell voltage of the respective battery cells such that the time between determining the initial cell voltage and the final cell voltage is the same for each battery cell.

Since only one voltage drop for each of the K battery cells may be sufficient to carry out the method, the method may be easy to implement, in particular but not limited to when determining the voltage drop from the initial cell voltage and the final cell voltage. Further, the method may be carried out quickly and/or without time delay before assembling a battery module.

The initial cell voltage and/or the final cell voltage may be stored in a database or the like. The voltage drop may be stored in a database or the like.

In at least one or more examples, the summary statistic can be a mean of the voltage drops of the N battery cells except for the extreme battery cell. The summary statistic can comprise a mean of the voltage drops of the N battery cells except for the extreme battery cell.

The mean may be or may comprise an arithmetic mean. Alternatively or additionally, the mean may be or may comprise a geometric mean. mean may be or may comprise a harmonic mean.

In at least one or more examples, when calculating the A-value of the N battery cells as function of the calculated summary statistic and the maximum voltage drop, the A-value can be calculated as a difference between the maximum voltage drop of the N battery cells and the mean of the voltage drops of the N battery cells except the extreme battery cell.

Alternatively or additionally, when calculating the A-value of the N battery cells as function of the calculated summary statistic and the minimum voltage drop, the A-value can be calculated as a difference between the mean of the voltage drops of the N battery cells except the extreme battery cell and the minimum voltage drop of the N battery cells.

When calculating the A-value, the A-value can be calculated as absolute value of the difference between the voltage drop of the extreme battery cell and the mean of the voltage drops of the N battery cells except the extreme battery cell.

Choosing the mean as summary statistic may result in a comparatively easy to calculate A-value, and in general the method can be easy to implement.

The second A-value may be calculated similarly to the A-value, e.g. by a similar formula or function.

In at least one or more examples, when removing the extreme battery cell from the N battery cells and adding the alternative battery cell from the K battery cells to the N battery cells, the voltage drop of the alternative battery cell can lie within a preset range from the mean of the voltage drops of the N battery cells except for the mean battery cell.

In at least one or more examples, the preset range can be 0.1 to 10 percent. The preset range can be 0.1 to 5 percent. The preset range can be 0.1 to 2 percent. Alternatively or additionally, the preset range can be or comprise a standard deviation and/or an average absolute deviation of the N battery cells except for the extreme battery cell. Alternatively or additionally, the preset range can be a value, such as e.g. 0.3 mV, or e.g. 0.1 mV. Alternatively or additionally, the preset range can be equal to, or a multiple of, the standard deviation of the voltage drop of the N battery cells except the extreme battery cell.

When the alternative battery cell is chosen such that its voltage drop lies within the preset range, the alternative battery can be easily and quickly chosen as thereby it may be ensured that the A-value as calculated by the summary statistic and the voltage drop of the alternative battery may be smaller than the threshold.

In at least one or more examples, the summary statistic can comprise a mean and a standard deviation of the voltage drops of the N battery cells except for the extreme battery cell. The A-value can be calculated as the difference of the maximum voltage drop minus the mean and the standard deviation. The A-value can be calculated as the sum of the mean and the standard deviation minus the minimum voltage drop.

In at least one or more examples, the method may further comprise:

if and after removing the extreme battery cell from the N battery cells and adding an alternative battery cell from the K battery cells to the N battery cells, repeating, for the N battery cells including the added alternative battery cell, the steps of:

determining an extreme battery cell;

calculating a summary statistic as function of the voltage drops of the N battery cells except for the extreme battery cell; and

calculating an A-value;

and the method may further comprise:
if the A-value is larger than the preset threshold, removing the extreme battery cell from the N battery cells and adding another alternative battery cell from the K battery cells to the N battery cells such that the N battery cells comprise the another alternative battery cell and the N battery cells except for the extreme battery cell, wherein a second A-value as calculated as function of the summary statistic and the voltage drop of the another alternative battery is smaller than the preset threshold.

In at least one or more examples, the steps can be repeated and the extreme battery can be replaced until the A-value may be smaller than the preset threshold. Alternatively or additionally, the steps can be repeated and the extreme battery can be replaced until a specified number or repetitions is reached.

By repeating and/or iterating, the selected battery cells may be more homogeneous when there are two or more outliers. By repeating and/or iterating, multiple outliers, such as battery cells with substantial different voltage drops than the other battery cells, may be identified and/or replaced. In particular, if the (initially) chosen number N of battery cells contains two or more distinct groups, such that e.g. the deviations between battery cells in a same group are small, but the deviations of battery cells of different groups are large, repeating and/or iterating may result in a more homogenous final selection of battery cells.

It may be provided that when the number of battery cells for possibly replacing the extreme battery cell, i.e. the number of K - N battery cells as provided at the beginning of the method, and/or as initially provided, is exhausted, the method may further comprise providing another integer number of battery cells which may be considered as alternative battery cells for replacing an extreme battery cell when iterating and/or repeating. Herein, "exhausted" may mean that all battery cells of the K battery cells provided have already been used and/or tried as replacement for the extreme battery cell at least once or for a specific number of tries, without resulting in the second A-value being smaller than the preset threshold. It may be provided that the "specific number of tries" is larger than one.

The method may further comprise labeling the extreme battery cell when removing the extreme battery cell from the N battery cells. The labeling may comprise the voltage drop of the extreme battery cell. Labeling may be advantageous when the voltage drop of battery cells is not already determined for all battery cells in storage, but only the K battery cells. Then, when assembling another battery module, or when carrying out the method to assemble another battery module, the labeled battery cell may be chosen directly without any further measurements when its voltage drop (as known from the label) is such that it may satisfy the second A-value when chosen as alternative battery cell. The labeling may be carried out electronically. Labeling may include updating or modifying a database or a datafile.

In at least one or more examples, the method may further comprise providing a relationship between a probability of no-good battery modules and the A-value. The preset threshold may be determined so as to correspond to a target probability of no-good battery modules.

The relationship may be or comprise a function with the A-value as input and the probability of a no-good battery module as output. The function is not necessarily limited to the A-value as input, but may have other and/or additional inputs. The relationship may be or may comprise a mapping of A-values to probabilities of no-good battery modules. The relationship may be created, generated, determined and/or constructed based on a number and/or sample of battery modules.

It may be provided that depending on the use case and/or the desired specifications of the battery module, the acceptable probability of a no-good battery module may differ. Thus, the threshold may be adjusted accordingly. For instance, the threshold may be adjusted such as to be equal to or below (but not too far below) a or the target probability of no-good battery modules. The target probability may be a probability still acceptable for a given use case and/or specification of the battery module. The target probability may be preset, specified, given and/or predetermined.

In at least one or more examples, the relationship between the probability of no-good battery modules and the A-value may be a cumulative distribution function. The target probability may be chosen at an inflection point of the cumulative distribution function. Thereby, the threshold may be chosen easily and non-arbitrarily, while ensuring the target probability of no-good battery modules.

The cumulative distribution function may be equal to the probability that a battery module has an A-value equal to or less than a specific A-value. The cumulative distribution function may be in the interval [0, 1]. The cumulative distribution function may be monotonous function. The cumulative distribution function may be monotonous with respect to the A-value. The cumulative distribution function may be an empirical cumulative distribution function. The cumulative distribution function may be created, generated, determined and/or constructed based on a number and/or sample of battery modules.

The inflection point may correspond to a kink, a sudden change, a change of sign of a slope, or the like, of the relationship and/or the cumulative distribution function, but is not necessarily limited thereto. The inflection point may be or may correspond to a point of interest of the relationship and/or the cumulative distribution function. The inflection point may be or may comprise a point where the first derivative of the relationship and/or the cumulative distribution function vanishes, but is not necessarily limited thereto. The inflection point may be a point separating the relationship and/or the cumulative distribution function into distinct regions, such as e.g. regions with differing slope and/or values of a derivative, e.g. the first derivative. The inflection point may be identified, computed and/or chosen by a heuristic. The inflection point may be chosen and/or identified by optical inspection of the relationship and/or the cumulative distribution function. It may be provided that the relationship and/or the cumulative distribution function has one inflection point. It may be provided that the relationship and/or the cumulative distribution function has one or more inflection points.

In at least one or more examples, the method may further comprise assembling the alternative battery cell and the N battery cells except for the extreme battery cell and to a battery module. The method may comprise assembling the extreme battery cell and the N battery cells except the extreme battery cell to a battery module if the A-value is smaller than the preset threshold. The method may comprise assembling the N battery cells a battery module. It may be provided that at least two, some or all battery cells of a battery module may be connected in series. It may be provided that at least two, some or all battery cells of a battery module may be connected in parallel. It may be provided that at least two or some of the battery cells of a battery module may be connected in series, and at least two or some other battery cells of the battery module may be connected in parallel. When assembling a battery module and/or battery pack, it may be provided that additional steps may be carried out, as understood by the skilled person.

Another aspect of the invention relates to a battery module, the battery module being assembled according to the battery module assembly method according to the invention. Thus, a more homogeneous battery module may be obtained, and the quality of the battery module may be improved. Accordingly, the probability that the battery is a no-good battery module may be adjusted. Further, the mV/day Delta may be improved.

In at least one or more examples, the battery module can have a mV/day Delta of 0.5 or less. The battery module can have a mV/day Delta of 0.3 or less. Thereby, the battery module may have a good quality, and the probability of defects may be reduced.

The mV/day Delta may be related and/or correspond to a voltage reduction for a specific time period for each bank of a battery module. The mV/day Delta may be defined as the difference between the maximum value of mV/day from all banks and the mV/day average of each bank except the max. Here, mV/day may be defined as the difference between the voltage of each bank (at a reference time point, e.g. at t=0) and voltage of each bank (at day n), divided by the number of days between the reference time point and the day n. A bank of a battery module may be or may comprise at least one or more battery cells. A bank of a battery module may comprise one or more battery cells aligned with each other.

In at least one or more examples, the battery module can comprise a number of N battery cells, N being an integer number larger than or equal to two, wherein the difference of the voltage drops between any two of the N battery cells may be in a or the preset range. Thus, a more homogeneous battery module may be obtained. The preset range may correspond to or be equal to the preset threshold, but is not necessarily limited thereto.

Further, an automated battery manufacturing system is disclosed. The automated battery manufacturing system may be configured to assembly a battery module and/or a battery pack. The automated battery manufacturing system may comprise devices, units, machines, tools and/or other devices for assembling a battery module and/or a battery pack. For instance, the automated battery manufacturing system may be configured to assemble a battery module from battery cells. For instance, the automated battery manufacturing system may be configured to assemble a battery pack from one or more battery modules. The battery module and/or battery pack may be assembled according to a given specification, and the automated battery manufacturing system may be configured accordingly. The term "automated battery manufacturing system" may be used herein as commonly understood in the field of battery manufacturing.

Further, an automated plant is disclosed. The automated plant may comprise the automated battery manufacturing system as disclosed herein. The examples and optional features of the automated manufacturing system as disclosed herein may also apply to the automated plant, and/or vice versa.

The automated plant may be or may include a smart factory, in which the automated battery manufacturing system may be implemented. The examples and optional features of the automated manufacturing system as disclosed herein may also apply to the smart factory, and/or vice versa. The term "smart factory" may be used herein as commonly understood in the field of industrial processing, particularly in the fields of automation, Internet of Things, artificial intelligence, big data analytics, cloud computing and robotics. In particular, the smart factory may be understood in connection with the Industry 4.0 paradigm. The smart factory as used herein may also be referred to as a digital factory or intelligent factory, and may indicate an advanced manufacturing facility that utilizes various digital technologies, automation, and data exchange in production processes.

Further, an automated battery manufacturing method is disclosed. The automated battery manufacturing method, also shortly referred to herein as a "battery manufacturing method" or "method", may comprise the steps for manufacturing a battery cell. Alternatively or additionally, the automated battery manufacturing method may comprise steps for manufacturing and/or assembling a battery module. Alternatively or additionally, the automated battery manufacturing method may comprise steps for manufacturing and/or assembling a battery pack. The automated battery manufacturing method may comprise all required steps, as understood by the skilled person. However, the automated battery manufacturing method may not necessarily be limited thereto.

The automated battery manufacturing system and/or automated plant may be configured and/or used to assemble and/or manufacture a battery module and/or battery pack according to the invention. The automated battery manufacturing method may be carried out to assemble and/or manufacture a battery module and/or battery pack according to the invention.

The method may be facilitate an integration of a battery manufacturing process into an automated plant, such as a smart factory. Furthermore, the system and the method disclosed herein may facilitate automation of battery manufacturing, thereby reducing cost, time and energy required.

The automated battery manufacturing system may be capable of carrying out the automated battery manufacturing method as disclosed herein. Furthermore, the automated battery manufacturing system may be capable of carrying out any, some or all of the steps of the automated battery manufacturing method disclosed herein. The automated battery manufacturing method may be implemented to be carried out in the automated battery manufacturing system as disclosed herein.

BRIEF DESCRIPTION OF THE DRAWINGS

The invention is further disclosed with reference to the following figures:

Fig. 1: a schematic of the steps of a method according to the invention;

Fig. 2: a schematic of some of the steps of another method according to the invention;

Fig. 3: an illustrative example of a method according to the invention;

Fig. 4: another illustrative example of a method according to the invention;

Fig. 5: another illustrative example of a method according to the invention;

Fig. 6: another illustrative example of a method according to the invention;

Fig. 7: another illustrative example of a method according to the invention;

Figs. 8a, 8b: illustrative examples of a battery module according to the invention; and

Fig. 9: an exemplary cumulative distribution of A-values.

DETAILED DESCRIPTION

Hereinafter, various embodiments of the present disclosure will be described in detail with reference to the accompanying drawings so that those skilled in the art can easily perform the teaching as disclosed herein. The present disclosure may be modified in various different ways, and is not necessarily limited to the embodiments set forth herein. The invention may be implemented in many different forms and is not limited to the embodiments described herein.

It may be provided that a description of parts not related to the description may be omitted for clarity, as may be understood by the skilled person.

Further, throughout the description, when a feature, element, unit or the like is referred to as "having", "including" or "comprising" a certain component, it may mean that the respective feature element, unit or the like can further include other components, without excluding the other components, unless otherwise stated.

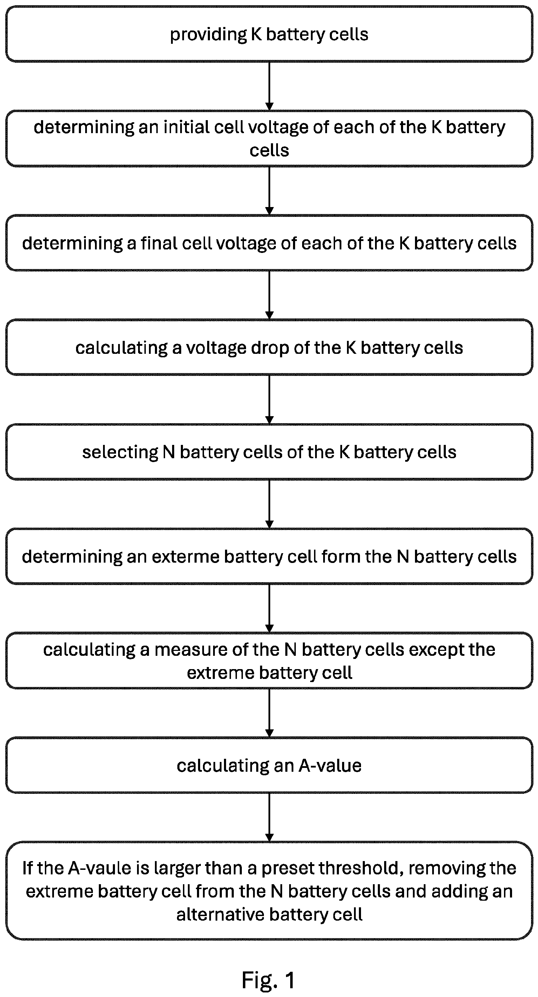

In figure 1, steps of a method according to the invention are shown. The method may comprise additional steps, which may not be shown in fig. 1.

In a first step, K battery cells 110 are provided. K is an integer number.

An initial cell voltage of each of the K battery cells 110 is determined. For instance, the initial cell voltage may be determined after the manufacturing of each of the K battery cell 110. The initial cell voltage of a battery cell 110 may be determined substantially immediately after the manufacturing of said battery cell 110. The initial cell voltage of a battery cell 110 may be determined at a specific time after the manufacturing of said battery cell 110.

A final cell voltage of each of the K battery cells 110 is determined. For instance, the final cell voltage may be determined at a specific time point. The specific time point of some or all of the K battery cells 110 may be the same or identical. The specific time point may be chosen independent of when the initial cell voltage of a battery cell 110 has been determined. The difference between the time point of determining the final cell voltage and the time point of determining the initial cell voltage may differ for some or all of the K battery cells 110.

The final cell voltage may be determined after a storage duration of the respective battery cell 110. For instance, battery cells 110 may be stored after manufacturing. The time point of determining the final cell voltage may be the time at which the K battery cells 110 are provided, e.g. chosen or selected from a number of stored battery cells.

A voltage drop of each of the K battery cells is calculated. The voltage drop VD may be calculated from the difference of final cell voltage and the initial cell voltage, i.e. may be calculated as final cell voltage minus initial cell voltage. The voltage drop VD may be due to a self-discharge of the respective battery cells 110.

A number N of battery cells 110 is selected from the K battery cells 110. N is an integer number smaller than K. The maximum value of N may be K-1 or less. The minimum value of N may be 2 or more. The number N may correspond to a number of battery cells 110 to be assembled to a battery module 100. The number N may be equal to a number of battery cells 110 to be assembled to a battery module 100. Alternatively, the number N may be smaller than a number of battery cells 110 to be assembled to a battery module 100.

An extreme battery cell is determined. The extreme battery cell is one of the N battery cells 110, which exhibits a maximum voltage drop VD. The extreme battery cell may be the one battery cell 110 of the N battery cells 110 which has the highest voltage drop VD, or which voltage drop VD is the largest of all N battery cells 110. Alternatively, the extreme battery cell may be the one battery cell 110 of the N battery cells 110 which has the lowest voltage drop VD, or which voltage drop VD is the smallest of all N battery cells 110. The index of the extreme battery cell may be k.

The highest voltage drop may be called max-imum voltage drop, $VD_{max} = \max_{j \in N} (V_j)$, i.e. the max-imum value of the voltage drops $VD_j$ of the j = 1, ..., N battery cells 101. The lowest voltage drop may be called minimum voltage drop, $VD_{min} = \min_{j \in N} (V_j)$, i.e. the mini-mum value of the voltage drops $VD_j$ of the j = 1, ..., N battery cells 101.

A summary statistic M is calculated as function of the voltage drops VD of the N battery cells 110 except for the extreme battery cell. The summary statistic M may be calculated for the N-1 battery cells 110 but the extreme value battery cell.

The summary statistic M may be or comprise a mean $\mu$. The mean may be or comprise an arithmetic mean. The mean may be a mean of the voltage drops VD of the respective battery cells 110. The mean may be calculated as

$$\mu = \frac{1}{N-1} \sum_{j \neq k} VD_j$$

where j = 1, ..., N is the jth battery cell, k is the extreme battery cell and $VD_j$ is the voltage drop of battery cell j.

Alternatively or additionally, the summary statistic M may be or comprise a geometric mean, and/or a harmonic mean, such as a geometric mean and/or a harmonic mean of voltage drops. The mean $\mu$ may be or comprise a geometric mean and/or a harmonic mean.

The summary statistic M may comprise a stan-dard deviation $\sigma$. The standard deviation $\sigma$ may be a standard deviation of the voltage drops VD of the respective battery cells. The standard deviation may be calcu-lated as

$$\sigma = \sqrt{\frac{1}{N-1} \sum_{j \neq k} (VD_j - \mu)^2}$$

The standard deviation may be calculated to be un-biased, e.g. as $\sigma = \sqrt{\frac{1}{N-2} \sum_{j \neq k} (VD_j - \mu)^2}$. The summary statistic M may comprise a variance $\sigma^2$.

The summary statistic M may comprise an average absolute deviation. The average absolute deviation d may be or comprise a mean absolute deviation with respect to the mean of the voltage drops of the respective battery cells 110. The mean absolute deviation may be calculated as

$$d = \frac{1}{N-1} \sum_{j \neq k} |VD_j - \mu|$$

where |...| denotes the absolute value. Alternatively or additionally, the average absolute deviation d may be or comprise a median absolute deviation, where the mean $\mu$ in the formula immediately preceding above is replaced by the median. Alternatively or additionally, the average absolute deviation d may be or comprise a mode absolute deviation, where the mean $\mu$ in the formula immediately preceding above is replaced by the mode.

The summary statistic M may be or comprise other functions, alternatively or additionally. For instance, the summary statistic M may be or comprise a function characteristic of a dispersion of the voltage drops of the N batter cells 110 except the extreme battery cell. For instance, the summary statistic M may be or comprise a median, a mode or modal value, a maximum value, an average absolute deviation with respect to a mean or median, a mean absolute deviation with respect to a mode or modal value, a metric such as e.g. a distance metric, or another suitable function.

These calculations of summary statistics M are only exemplary. Other ways of calculating a summary statistic M may be used, and/or different ways may be combined.

An A-value A of the N battery cells 110 as function of the calculated summary statistic M and the voltage drop of the extreme battery cell is calculated. The A-value of the N battery cells 110 may be calculated as function of the calculated summary statistic M and the maximum voltage drop. The A-value A of the N battery cells 110 may be calculated as function of the calculated summary statistic M and the minimum voltage drop, $A = f(M, VD_k)$, where M is the summary statistic and $VD_k$ is the voltage drop of the extreme battery cell. For instance, $VD_k$ may be a maximum voltage drop $VD_{max}$ or a minimum voltage drop $VD_{min}$.

The A-value may be calculated as difference between the maximum voltage drop of the N battery cells and the mean of the voltage drops of the N battery cells except the extreme battery cell, $A = VD_{max} - \mu$. The A-value may be calculated as difference between the mean of the voltage drops of the N battery cells except the extreme battery cell and the minimum voltage drop, $A = \mu - VD_{min}$.

The A-value may be calculated as the absolute value of the difference between the mean of the voltage drops of the N battery cells except the extreme battery cell and the voltage drop $VD_k$ of the extreme battery cell 101 (index k), $A = |\mu - VD_k|$.

Other functions to calculate the A-value A are possible.

For instance, instead of the mean the mode or the median of the voltage drops VD of the N battery cells except the extreme battery cell may be used.

For instance, the A-value may be calculated taking into account the standard deviation $\sigma$ (or the variance $\sigma^2$), the average absolute deviation d or another suitable dispersion. As an example, the A-value may be calculated as $A = VD_{max} - \mu - \sigma$ or as $A = \mu + \sigma - VD_{min}$. Instead of the mean, the median or mode may be used. Instead of the standard deviation, e.g. the average absolute deviation or another dispersion may be used.

These calculations of A-values A are only exemplary. Other ways of calculating an A-value A may be used, and/or different ways may be combined.

The calculated A-value is compared to a preset threshold. The preset threshold may be a preset value $A_T$. If the A-value is larger than the preset threshold, the extreme battery cell is removed from the N battery cells 110 and an alternative battery cell is added. In other words, the extreme battery cell is replaced with another battery cell from the K battery cells not in the number of N battery cells. The alternative battery cell is added such that a second A-value $\Lambda$ as calculated as function of the summary statistic M (as e.g. already calculated for the not replaced battery cells 110) and the voltage drop VD of the alternative battery cell is smaller than the preset threshold.

In other words, if the A-value A is larger than the preset threshold $A_T$, the extreme battery cell may be replaced by an alternative battery cell from the K battery cells not in the N battery cells whose voltage drop is closer to the summary statistic M than the voltage drop of the extreme battery cell 110.

If the A-value A is smaller than the preset threshold $A_T$, the extreme battery cell may remain in the number N of battery cells 110. If the A-value A is smaller than the preset threshold $A_T$, the extreme battery cell may not be replaced by an alternative battery cell.

The alternative battery cell is chosen such that a second A-value $\Lambda$ as calculated from the summary statistic M and the voltage drop of the alternative battery cell is smaller than the threshold $A_T$. When calculating the second A-value $\Lambda$ as function of the summary statistic M and the voltage drop of the alternative battery cell, a similar method or mathematical formula may be used as when the A-value A is calculated as function of the summary statistic M and the extreme battery cell, $\Lambda = f(M, VD_{k*})$, where index k* designates the alternative battery cell.

For instance, the second A-value $\Lambda$ can be calculated as

$$\Lambda = |M - VD_{k*}|$$

where the index k* designates the alternative battery cell (replacing the extreme battery cell k), and M is the summary statistic as calculated for the remaining, unreplaced battery cells as calculated before. When the voltage dop of the alternative battery cell is larger than the summary statistic, the second A-value may be calculated as $\Lambda = VD_{k*} - M$. When the voltage drop of the alternative battery cell is smaller than the summary statistic, the second A-value $\Lambda$ may be calculated as $\Lambda = M - VD_{k*}$. The summary statistic M may e.g. be or comprise a mean, a mode or a median.

For instance, the second A-value $\Lambda$ may be calculated taking into account the standard deviation $\sigma$ (or the variance $\sigma^2$), the average absolute deviation $d$ or another suitable dispersion. The standard deviation $\sigma$ (or the variance $\sigma^2$), the average absolute deviation $d$ or another suitable dispersion may be calculated for the remaining not replaced battery cells. As an example, the second A-value may be calculated as $\Lambda = VD_{k*} - \mu - \sigma$ (e.g. when $VD_{k*}$ is larger than $\mu + \sigma$) or as $\Lambda = \mu + \sigma - VD_{k*}$ (e.g. when $VD_{k*}$ is smaller than $\mu + \sigma$). Instead of the mean, the median or mode may be used. Instead of the standard deviation, e.g. the average absolute deviation or another dispersion may be used.

The summary statistic M as used to calculate the second A-value $\Lambda$ may be the same as used to calculate the A-value A. The summary statistic M as used to calculate the second A-value $\Lambda$ may be identical to the one used to calculate the A-value A.

These calculations of second A-values $\Lambda$ are only exemplary. Other ways of calculating a second A-value $\Lambda$ may be used, and/or different ways may be combined.

When removing the extreme battery cell from the N battery cells and adding an alternative battery cell from the K battery cells to the N battery cells, the voltage drop of the alternative battery cell may lie within a preset range r from the mean of the voltage drops of the N battery cells. The preset range may be chosen such as to ensure that the second A-value $\Lambda$ is smaller than the threshold $A_T$.

The preset range may be a percentage. The percentage may be e.g. 0.1 to 10 percent, or 0.1 to 5 percent, or 0.1 to 2 percent, or 0.1 to 1 %. Alternatively or additionally, the preset range can be or comprise a standard deviation and/or an average absolute deviation of the N battery cells except the extreme battery cell. For instance, it may be provided that the preset range $r = \sigma$, such that the preset range may be equal to the standard deviation of the N battery cells except the extreme battery cell. Alternatively, the preset range r may be a (real-value) multiple of the standard deviation $\sigma$ of the N battery cells except the extreme battery cell, wherein the multiple may be given or specified. For instance, it may be provided that the preset range $r = d$, such that the preset range may be equal to the average absolute deviation d of the N battery cells except the extreme battery cell. Alternatively, the preset range r may be a (real-value) multiple of the average absolute deviation d of the N battery cells except the extreme battery cell, wherein the multiple may be given or specified.

When given a preset range r, the alternative battery cell can be chosen to be a battery cell having a voltage drop $VD_{k*}$ such that

$$\frac{|M - VD_{k*}|}{M} \leq r$$

or such that

$$\frac{|M - VD_{k*}|}{VD_{k*}} \leq r$$

Alternatively or additionally, the preset range r may be or comprise a value, such as e.g. a value of 0.5 mV or less, or 0.3 mV or less, or 0.1 mV or less. Given the preset range, the alternative battery cell can be chosen to be a battery cell having a voltage drop $VD_{k*}$ such that $|M - VD_{k*}| \leq r$.

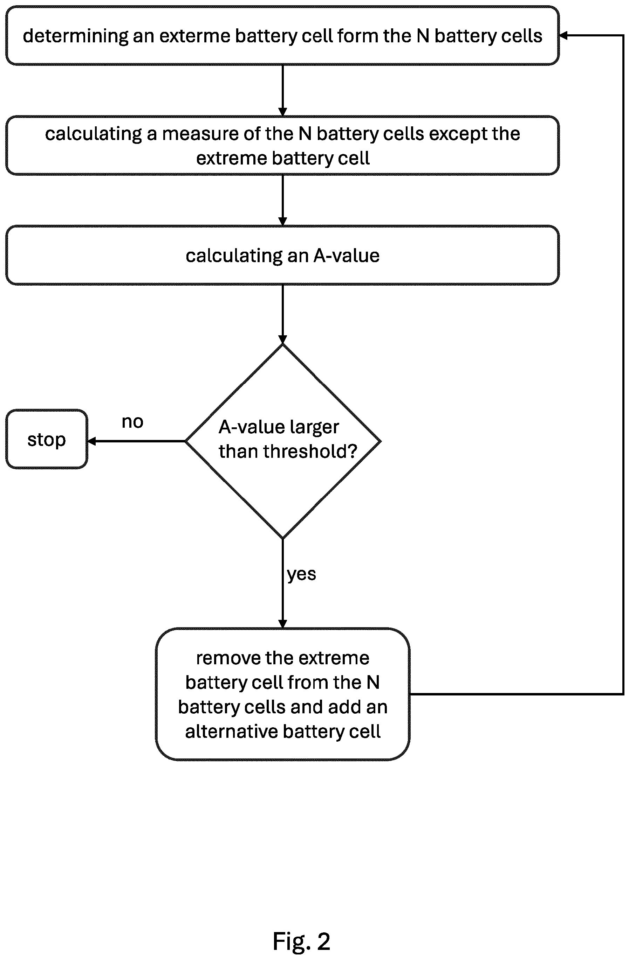

In fig. 2, some steps of another method are shown. The method may comprise additional steps, which may not be shown in fig. 2. In particular, the method may comprise the steps of providing K battery cells, determining an initial cell voltage of each of the K battery cells, determining a final cell voltage of each of the K battery cells, calculating a voltage drop of the K battery cells and selecting N battery cells from the K battery cells, as e.g. shown in fig. 1.

The method may further include repeating the steps of determining an extreme battery cell form the N battery cells, calculating a summary statistic of the N battery cells except the extreme battery cell, calculating an A-value and checking whether the A-Value is larger than the threshold if the A-value as calculated from the summary statistic and the extreme battery cell is larger than the threshold. In other words, the set of N battery cells containing the N-1 battery cells and the alternative battery cell may be checked again, such that when repeating the steps, a new extreme battery cell from the set of the alternative battery cell and the not replaced battery cells may be determined, which might be replaced as well.

When repeating the steps and/or iterating, an extreme battery cell from the modified and/or updated number N of battery cells may be determined for each iteration and/or repetition. Then, the summary statistic may be calculated for the remaining N-1 cells, and the A-value may be determined. If the A-value is larger than the threshold, the extreme battery may be replaced with an alternative battery such that the A-value calculated for the summary statistic and the voltage drop of the alternative battery (i.e. the second A-value) is larger than the threshold, and the set of N battery cells is updated such that the N battery cells include the alternative battery cell and the N-1 remaining (not replaced) battery cells 110. Then, another iteration/repetition may be carried out based on the updated set of N battery cells 110.

Thus, the method may iterate and or repeat the steps. The iteration and/or repeats may continue until the A-value (as calculated from the summary statistic and the extreme battery cell) is smaller than the threshold. Alternatively or additionally, the iteration and/or repeats may continue until a specified number of iterations is reached.

By repeating and/or iterating, the selected battery cells may be more homogeneous when there are two or more outlier battery cells, or two or more battery cells having high deviations. By repeating and/or iterating, multiple outliers, such as battery cells with substantial different voltage drops than the other battery cells, may be identified and/or replaced. In particular, if the (initially) chosen number N of battery cells contains two or more distinct groups, such that e.g. the deviations between battery cells in a same group are small, but the deviations of battery cells of different groups are large, repeating and/or iterating may result in a more homogenous final selection of battery cells.

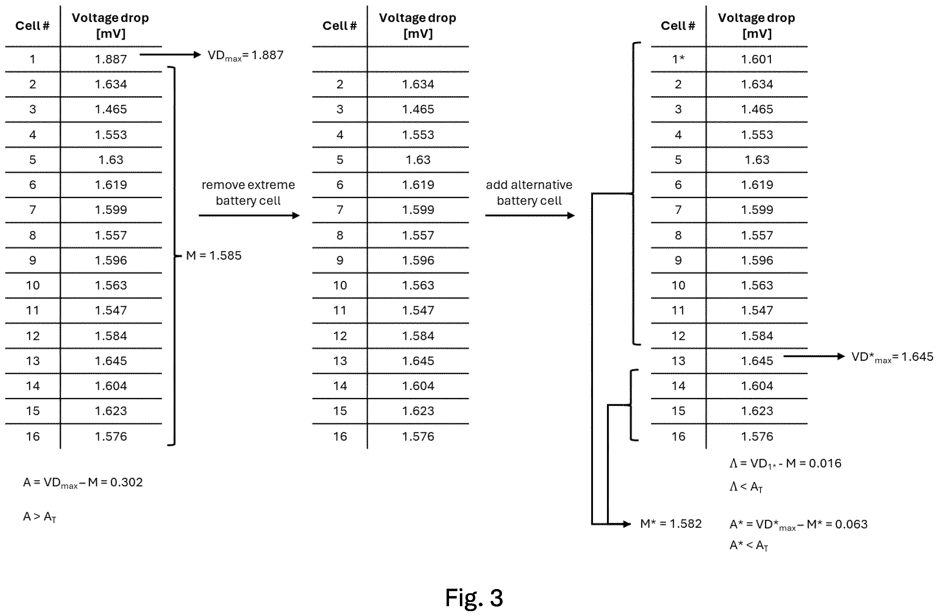

Figures 3 to 6 show exemplary sets of N battery cells 110. Other sets and/or configurations of battery cells 110 are possible, as are other ways to define or calculate e.g. the summary statistic, the A-value, the second A-value, the threshold and/or the preset range.

In Fig. 3, 16 battery cells 110 are selected from K battery cells 110, i.e. N = 16. Here, the first battery cell (cell # 1) has the highest voltage drop, i.e. $VD_1 = VD_{max} = 1.887$ [mV]. Cell # 1 is chosen as extreme battery cell (k=1). The threshold $A_T$ is chosen as $A_T = 0.25$ mV. As summary statistic M of the N-1 = 15 battery cells except the extreme battery cell, i.e. of cells #2 to cell # 16, the mean is calculated as $\mu = 1.585$ mV, with $\mu$ as arithmetic mean. The A-value is calculated as $A = VD_{max} - M = 0.302$ mV. Thus, the A-value is larger than the threshold, $A > A_T$.

As the A-value is larger than the threshold, the extreme battery cell (cell #1) is removed from the N battery cells, cf. the middle column of fig. 3. Then, an alternative battery cell (cell # 1*) is added, cf. the right column. In other words, the extreme battery cell, cell # 1 (left column), is replaced by the alternative battery cell, cell # 1* (right column). The alternative battery cell is chosen such that a second A-value as calculated from the summary statistic M and the voltage drop of the alternative battery cell is smaller than the threshold. For instance, here the voltage drop of the alternative battery cell is $VD_{1*} = 1.601$ mV. Here, the second A-value is calculated as $\Lambda = |VD_{1*} - M| = 1.601$ mV - 1.585 mV = 0.016 mV, which is smaller than the threshold.

The alternative battery cell to be added can be chosen and/or selected such that its voltage drop $VD_{k*}$ is within a preset range r of the summary statistic, here the mean of the not replaced remaining N-1 battery cells. For instance, r may be here 2 percent, which is satisfied by the alternative battery cell (regardless of the reference value of either the summary statistic or the voltage drop of the alternative cell, as can be easily checked, (1.601 - 1.585)/1.585 < 0.02), and also (1.601 - 1.585)/1.601 < 0.02)). If the preset range r was different, a different alternative battery cell might have been chosen if the alternative battery as selected here cell would not satisfy the preset range.

The configuration and/or set of the N battery cells as shown in fig. 3 satisfies the threshold after replacing the extreme battery cell, as can be seen from the right column of fig. 3. Here, the second A-value is smaller than the threshold, $\Lambda < A_T$. Further, after replacement, cell # 13 has the highest voltage drop, i.e. $VD_{13} = VD_{max} = 1.645$ mV, and thus cell # 13 could be considered as extreme battery cell. Now, if the summary statistic (here e.g. the mean) is calculated for the N-1 battery cells except the extreme battery cell, i.e. here for the alternative cell # 1*, cells #2 - 12, and cells # 14 - 16, this results in a mean value of 1.582 mV. The A-value thus would be calculated as A = 0.063 mV, which is smaller than the threshold $A_T = 0.25$ mV.

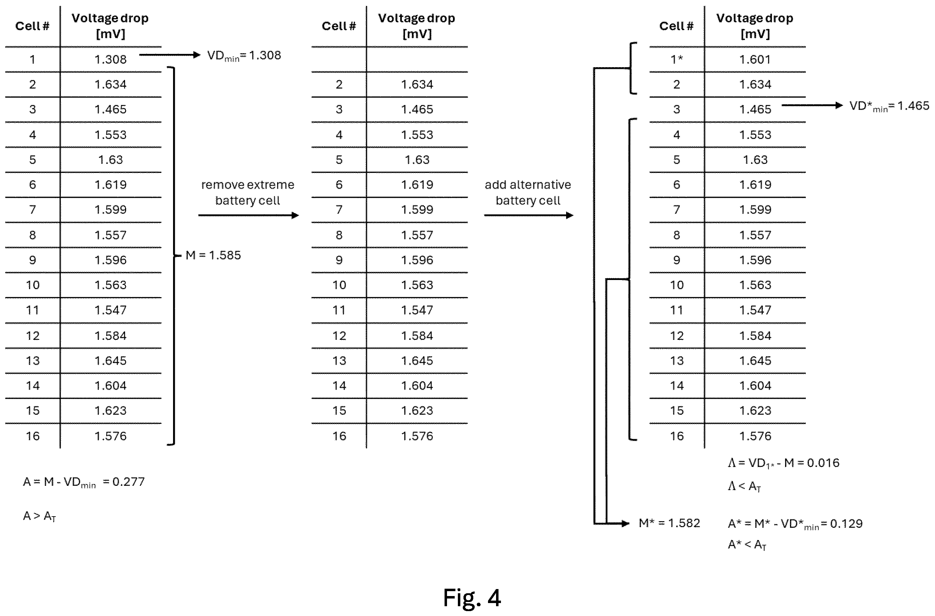

Fig. 4 shows another exemplary set of battery cells 110. Compared to fig. 3, in the left column the first battery cell has a voltage drop of 1.308 mV instead of 1.887 mV. The other 15 battery cells 110 of fig. 4 have the same voltage drops as in fig. 3. Here, the first battery cell (cell # 1) has the lowest voltage drop, i.e. $VD_1 = VD_{min} = 1.308$ [mV]. When defining the extreme battery cell as the cell having the lowest voltage drop, cell # 1 is the extreme battery cell. The threshold $A_T$ is chosen as $A_T = 0.25$ mV. As summary statistic M of the N-1 = 15 battery cells except the extreme battery cell, i.e. of cells #2 to cell # 16, the mean is calculated as $\mu = 1.585$ mV, with $\mu$ as arithmetic mean. The A-value is calculated as $A = M - VD_{min} = 0.277$ mV. Thus, the A-value is larger than the threshold, $A > A_T$.

As the A-value is larger than the threshold, the extreme battery cell (cell #1) is removed from the N battery cells, cf. the middle column of fig. 4. Then, an alternative battery cell (cell # 1*) is added, cf. the right column. In other words, the extreme battery cell, cell # 1 (left column), is replaced by the alternative battery cell, cell # 1* (right column). The alternative battery cell is chosen such that a second A-value $\Lambda$ as calculated from the summary statistic M and the voltage drop of the alternative battery cell is smaller than the threshold. Here, the second A-value is calculated as $\Lambda = |VD_{1*} - M| = 1.601$ mV - 1.585 mV = 0.016 mV, which is smaller than the threshold.

The alternative battery cell to be added can be chosen and/or selected such that its voltage drop VD is within a preset range r of the summary statistic, here the mean of the not replaced remaining N-1 battery cells. For instance, here the voltage drop of the alternative battery cell is $VD_{1*} = 1.601$ mV. For instance, r may be here 2 percent, which is satisfied by the alternative battery cell (regardless of the reference value of either the summary statistic or the voltage drop of the alternative cell, as can be easily checked, (1.601 - 1.585)/1.585 < 0.02), and also (1.601 - 1.585)/1.601 < 0.02)). If the preset range r was different, a different alternative battery cell might have been chosen if the alternative battery as selected here cell would not satisfy the preset range.

The configuration and/or set of the N battery cells as shown in fig. 4 satisfies the threshold after replacing the extreme battery cell, as can be seen from the right column of fig. 4. Here, the second A-value is smaller than the threshold, $\Lambda < A_T$. Further, after replacement, cell # 3 has the lowest voltage drop, i.e. $VD_3 = VD_{min} = 1.465$ mV, and thus cell # 3 could be considered as the extreme battery cell. Now, if the summary statistic (here e.g. the mean) is calculated for the N-1 battery cells except the extreme battery cell, i.e. here for the alternative cell # 1* and 2, and cells #4 - 16, this results in a mean value of 1.594 mV. The A-value thus would be calculated as A = 0.129 mV, which is smaller than the threshold $A_T = 0.25$ mV.

It may be provided that before determining the extreme battery cell, the difference of the highest voltage drop and a summary statistic M, e.g. a mean, of the remaining N-1 battery cells (or the absolute value of the difference) is calculated, $\Delta_h = |VD_{max} - M| = VD_{max} - M$. Similarly, the difference of a summary statistic M, e.g. a mean, of the N battery cells except the battery cell with the lowest voltage drop and the lowest voltage drop (or the absolute value of the difference) may be calculated, $\Delta_h = |VD_{min} - M| = M - VD_{min}$. Alternatively, the summary statistic M may be calculated for the N battery cells except the battery cell with highest voltage drop and except the battery cell with lowest voltage drop, i.e. based on a number of N$_2$ battery cells.

If $\Delta_h > \Delta_l$, the battery cell having the highest voltage drop may be chosen as extreme battery cell. Otherwise, e.g. if $\Delta_h < \Delta_l$, the battery cell having the lowest voltage drop may be chosen as extreme battery cell. However, some other method or way for deciding whether to choose the cell having the highest voltage drop or the cell having the lowest voltage drop as extreme battery cell might be used.

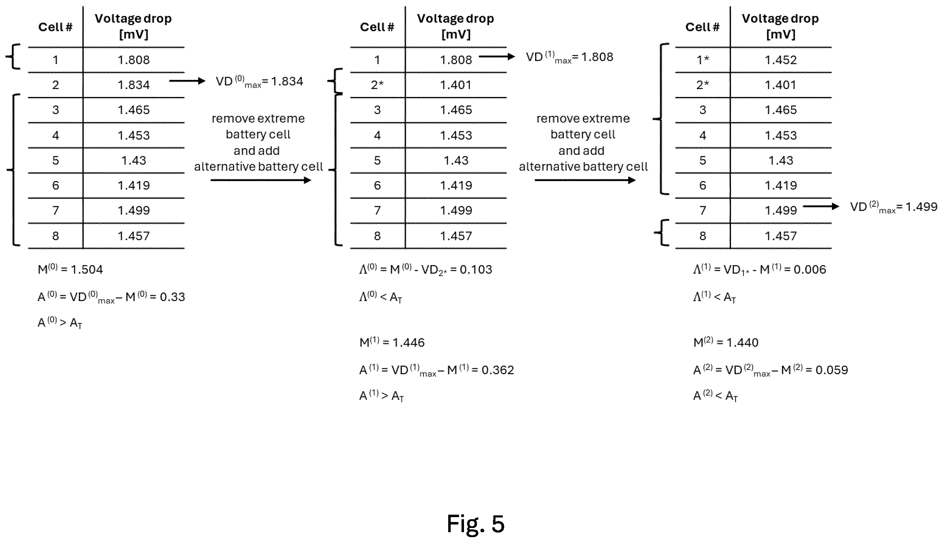

It may be provided to iterate and/or repeat at least some steps of the method, as shown by way of example in fig. 5, 6 and 7. When repeating and/or iterating, the function, method and/or way of determining the extreme battery cell and/or of calculating the A-value may differ and/or change for at least two or more, and/or all, iterations and/or repetitions. Alternatively or additionally, it may be provided that the determination of the extreme battery cell and/or the calculation of the A-value may not change for at least two or more, and/or all, iterations and/or repetitions.

Fig. 5 shows another exemplary set of battery cells 110. In Fig. 5, eight battery cells 110 are selected from K battery cells 110, i.e. N = 8. The upper indices in parentheses denote the number of iterations/repetitions.

In the example of fig. 5, the second battery cell (cell # 2) has the highest voltage drop, i.e. $VD_2 = VD^{(o)}_{max} = 1.834$ [mV]. When choosing the cell with the highest voltage drop as extreme battery cell, cell # 2 is chosen as extreme battery cell. The threshold $A_T$ is chosen as $A_T = 0.25$ mV. As summary statistic $M^{(o)}$ of the N-1 = 7 battery cells except the extreme battery cell, i.e. of cells #1 and cell # 3 - 8, the mean $\mu$ is calculated, $M^{(o)} = 1.504$ mV (as indicated by the brackets in the left column), with $\mu$ as arithmetic mean. The A-value is calculated as $A^{(o)} = VD^{(o)}_{max} - M^{(o)} = 0.333$ mV. Thus, the A-value is larger than the threshold, $A^{(o)} > A_T$.

As the A-value is larger than the threshold, the extreme battery cell (cell #2) is removed from the N battery cells and an alternative battery cell (cell # 2*) is added, cf. the middle column. In other words, the extreme battery cell, cell # 2 (left column), is replaced by the alternative battery cell, cell # 2* (middle column). The alternative battery cell is chosen such that a second A-value $\Lambda$ as calculated from the summary statistic M and the voltage drop of the alternative battery cell is smaller than the threshold. For instance, here the voltage drop of the alternative battery cell # 2* is $VD_{2*} = 1.401$ mV. Here, the second A-value is calculated as $A^{(o)} = |VD_{2*} - M^{(o)}| = 0.103$ mV, which is smaller than the threshold, $\Lambda^{(0)} < A_T$.

The alternative battery call to be added can be chosen and/or selected such that its voltage drop VD is within a preset range r of the summary statistic, here the mean of the not replaced remaining N-1 battery cells.

While the second A-value $\Lambda^{(0)}$ is smaller than the threshold after replacing the battery cell # 2, the configuration and/or set of the N battery cells as shown in the middle column of fig. 5 does not satisfy the threshold when iterating or repeating the calculation of the A-value, as can be seen from the middle column of fig. 5. When iterating and/or repeating, the first battery cell (cell # 1) has the highest voltage drop, i.e. $VD_1 = VD^{(1)}_{max} = 1.808$ [mV]. Cell # 1 is chosen as extreme battery cell. As summary statistic of the N-1 = 7 battery cells except the extreme battery cell, i.e. of cells #2* and cell # 3 - 8, the mean is calculated as $M^{(1)} = \mu = 1.446$ mV (as indicated by the brackets). The A-value is calculated as $A^{(1)} = VD_{max} - M^{(1)} = 0.333$ mV. Thus, the A-value is larger than the threshold, $A^{(1)} > A_T$. Hence, it may be provided to iterate and/or repeat the steps of determining an extreme battery cell, calculating a summary statistic, and possibly replacing the extreme battery cell.

As the A-value is larger than the threshold, the extreme battery cell (cell #1) is removed from the N battery cells and an alternative battery cell (cell # 1*) is added, cf. the right column. In other words, the extreme battery cell, cell # 1 (middle column), is replaced by the alternative battery cell, cell # 1* (right column). The alternative battery cell is chosen such that a second A-value $\Lambda^{(1)}$ as calculated from the summary statistic M and the voltage drop of the alternative battery cell is smaller than the threshold. The alternative battery call to be added can be chosen and/or selected such that its voltage drop VD is within a preset range r of the summary statistic, here the mean of the not replaced remaining N-1 battery cells. For instance, here the voltage drop of the alternative battery cell # 1* is $VD_{1*} = 1.452$ mV. Thus, the second A-value is $\Lambda^{(1)} = |VD_{1*} - M^{(1)}| = 0.006$, which is smaller than the threshold.

After replacement, cell # 7 has the highest voltage drop, i.e. $VD_7 = VD_{max} = 1.499$ [mV], and thus the extreme battery cell would be cell # 7 if repeating or iterating. Now, if the summary statistic (here e.g. the mean) is calculated for the N-1 battery cells except the extreme battery cell, i.e. here for the alternative cell # 1*, cells #2* - 6, and cell # 8, this results in a mean value of 1.44 mV. The A-value thus is calculated as $A^{(2)}$ = 0.059 mV, which is smaller than the threshold $A_T$ = 0.25 mV.

In the example of fig. 5, the battery cells 110 as initially selected may be thought of being part of one of two groups, where a first group may be identified as comprising cells # 1 and 2, and the second group may be identified as comprising cells # 3 to 8 as initially chosen (left column).

Thus, in the present example of fig. 5, repeating and/or iterating once leads to an A-value as calculated from the summary statistic and the voltage drop of the extreme battery cell that is below the threshold.

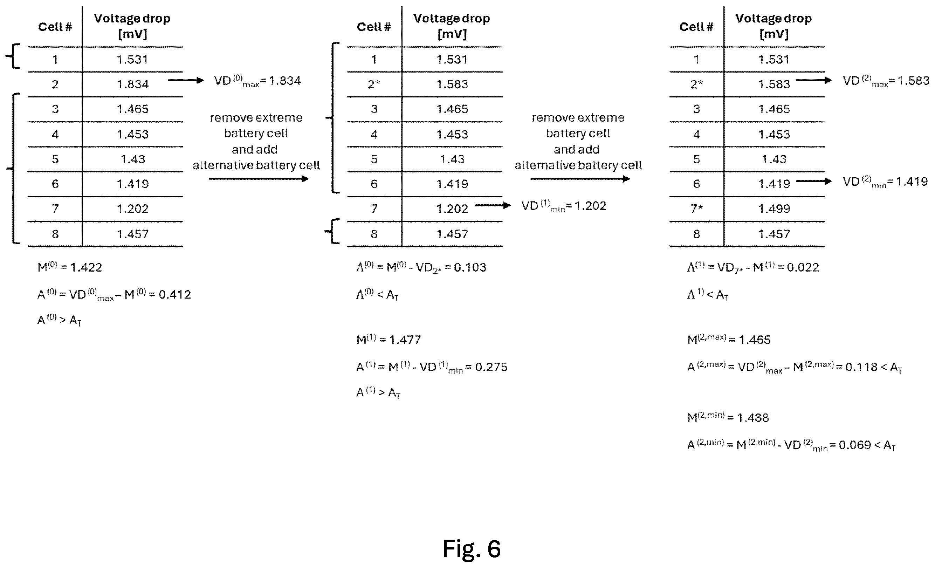

Fig. 6 shows another exemplary set of battery cells 110. In Fig. 6, eight battery cells 110 are selected from K battery cells 110, i.e. N = 8. Compared to fig. 5, in the left column the first battery cell has a voltage drop of 1.531 mV instead of 1.808 mV, and the seventh battery cell has a voltage drop of 1.202 mV instead of 1.499 mV. The upper indices in parentheses denote the number of iterations/repetitions.

In the example of fig. 6, the second battery cell (cell # 2) has the highest voltage drop, i.e. $VD_2 = VD^{(o)}_{max}$ = 1.834 [mV]. When the extreme battery cell is determined as the battery cell having the highest voltage drop, cell # 2 is chosen as extreme battery cell. The threshold $A_T$ is chosen as $A_T$ = 0.25 mV. As summary statistic $M^{(o)}$ of the N-1 = 7 battery cells except the extreme battery cell, i.e. of cells #1 and cell # 3 - 8, the mean $\mu$ is calculated, $M^{(o)}$ = 1.422 mV (as indicated by the brackets in the left column), with $\mu$ as arithmetic mean. The A-value is calculated as $A^{(o)} = VD^{(o)}_{max} - M^{(o)}$ = 0.412 mV. Thus, the A-value is larger than the threshold, $A^{(o)} > A_T$.

As the A-value $A^{(o)}$ is larger than the threshold, the extreme battery cell (cell #2) is removed from the N battery cells and an alternative battery cell (cell # 2*) is added, cf. the middle column. In other words, the extreme battery cell, cell # 2 (left column), is replaced by the alternative battery cell, cell # 2* (right column). The alternative battery cell is chosen such that a second A-value $\Lambda$ as calculated from the summary statistic M and the voltage drop of the alternative battery cell is smaller than the threshold. The alternative battery call to be added can be chosen and/or selected such that its voltage drop VD is within a preset range r of the summary statistic, here the mean of the not replaced remaining N-1 battery cells. For instance, here the voltage drop of the alternative battery cell # 2* is $VD_{2*}$ = 1.583. Thus, the second A-value is calculated as $\Lambda^{(0)} = |VD_{2*} - M^{(o)}|$ = 0.103, which is smaller than the threshold, $\Lambda^{(0)} < A_T$.

While the second A-value $\Lambda^{(0)}$ is smaller than the threshold after replacing the battery cell # 2, the configuration and/or set of the N battery cells as shown in the middle column of fig. 6 does not satisfy the threshold when iterating or repeating the calculation of the A-value. When iterating and/or repeating, the seventh battery cell (cell # 7) has the lowest voltage drop, i.e. $VD_7 = VD^{(1)}_{min}$ = 1.202 [mV]. When the extreme battery cell is determined as the battery cell having the lowest voltage drop, cell # 7 is chosen as extreme battery cell. As summary statistic of the N-1 = 7 battery cells except the extreme battery cell, i.e. of cells #1 and 2*, cells #3 - 6 and cell # 8, the mean is calculated as $M^{(1)} = \mu$ = 1.477 mV (as indicated by the brackets). The A-value is calculated as $A^{(1)} = |VD^{(1)}_{min} - M^{(1)}|$ = 0.275 mV. Thus, the A-value is larger than the threshold, $A^{(1)} > A_T$. Hence, it may be provided to iterate and/or repeat the steps of determining an extreme battery cell, calculating a summary statistic, and possibly replacing the extreme battery cell.

As the A-value $A^{(1)}$ is larger than the threshold, the extreme battery cell (cell #7) is removed from the N battery cells and an alternative battery cell (cell # 7*) is added, cf. the right column. In other words, the extreme battery cell, cell # 7 (middle column), is replaced by the alternative battery cell, cell # 7* (right column). The alternative battery cell is chosen such that a second A-value $\Lambda^{(1)}$ as calculated from the summary statistic M and the voltage drop of the alternative battery cell is smaller than the threshold. The alternative battery call to be added can be chosen and/or selected such that its voltage drop VD is within a preset range r of the summary statistic, here the mean of the not replaced remaining N-1 battery cells. For instance, here the voltage drop of the alternative battery cell # 7* is $VD_{7*}$ = 1.499 mV. Thus, the second A-value is $\Lambda^{(1)} = |VD_{7*} - M^{(1)}|$ =0.022 mV, which is smaller than the threshold.

After replacement, cell # 2* has the highest voltage drop, i.e. $VD_{2*} = VD_{max}$ = 1.583 [mV], and cell # 6 has the lowest voltage drop, i.e. $VD_6 = VD_{min}$ = 1.419 [mV]. Now, the summary statistic (here e.g. the mean) as calculated for the N-1 battery cells except the battery cell having the highest voltage drop, i.e. here except cell # 2*, is $M^{(2,max)}$ = 1.464 mV. Thus, the corresponding A-value is $A^{(2,max)} = VD^{(2)}_{max} - M^{(2,max)}$ = 0.119 mV which is smaller than the threshold. Similarly, the summary statistic (here e.g. the mean) as calculated for the N-1 battery cells except the battery cell having the lowest voltage drop, i.e. here except cell # 6, is $M^{(2,min)}$ = 1.464 mV. Thus, the corresponding A-value is $A^{(2,min)} = |VD^{(2)}_{min} - M^{(2,min)}|$ = 0.119 mV which is smaller than the threshold.

In the example of fig. 6, the battery cells 110 as initially selected may be thought of as comprising two outliers, where a first outlier may be identified as cell # 2 and a second outlier may be identified as cell # 7 (left column).

Thus, in the present example of fig. 6, repeating and/or iterating once lead to an A-value as calculated from the summary statistic and the voltage drop of the extreme battery cell that is below the threshold, irrespective of whether the extreme battery cell is chosen as cell with highest or lowest voltage drop.

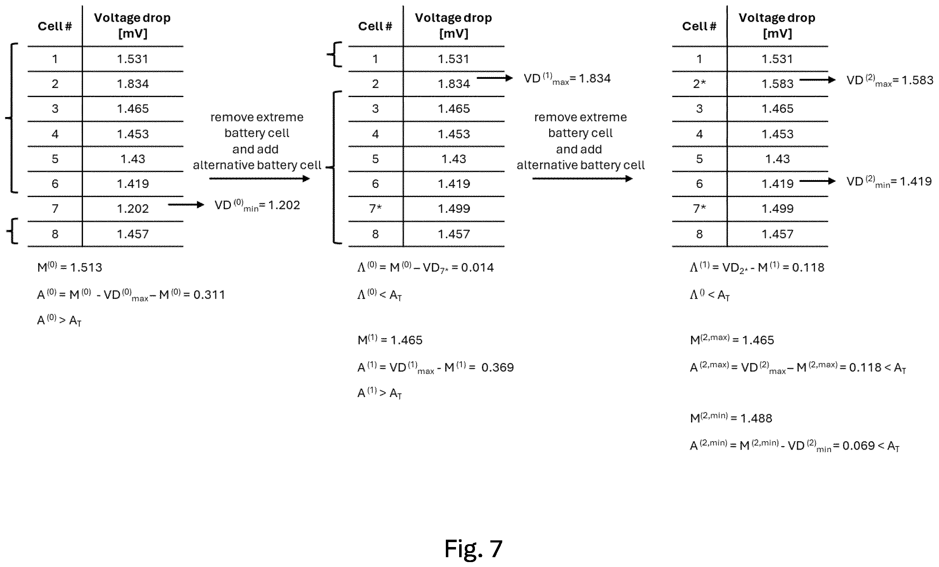

Fig. 7 shows another exemplary set of battery cells 110. In Fig. 7, eight battery cells 110 are selected from K battery cells 110, i.e. N = 8. The voltage drops of the battery cells in the left column are the same as in fig. 6. The upper indices in parentheses denote the number of iterations/repetitions.

In the example of fig. 7, the seventh battery cell (cell # 7) has the lowest voltage drop, i.e. $VD_7 = VD^{(o)}_{min} = 1.202$ [mV]. When the extreme battery cell is determined as the battery cell having the lowest voltage drop, cell # 7 is chosen as extreme battery cell. The threshold $A_T$ is chosen as $A_T = 0.25$ mV. As summary statistic $M^{(o)}$ of the N-1 = 7 battery cells except the extreme battery cell, i.e. of cells #1- 6 and cell # 8, the mean $\mu$ is calculated, $M^{(o)} = 1.513$ mV (as indicated by the brackets in the left column), with $\mu$ as arithmetic mean. The A-value is calculated as $A^{(o)} = |VD^{(o)}_{min} - M^{(o)}| = 0.311$ mV. Thus, the A-value is larger than the threshold, $A^{(o)} > A_T$.

As the A-value $A^{(o)}$ is larger than the threshold, the extreme battery cell (cell #7) is removed from the N battery cells and an alternative battery cell (cell # 7*) is added, cf. the middle column. In other words, the extreme battery cell, cell # 7 (left column), is replaced by the alternative battery cell, cell # 7* (right column). The alternative battery cell is chosen such that a second A-value $\Lambda$ as calculated from the summary statistic M and the voltage drop of the alternative battery cell is smaller than the threshold. The alternative battery call to be added can be chosen and/or selected such that its voltage drop VD is within a preset range r of the summary statistic, here the mean of the not replaced remaining N-1 battery cells. For instance, here the voltage drop of the alternative battery cell # 7* is $VD_{7*} = 1.499$ mV. Thus, the second A-value is calculated as $\Lambda^{(0)} = |VD_{7*} - M^{(o)}| = 0.014$ mV, which is smaller than the threshold, $\Lambda^{(0)} < A_T$.

While the second A-value $\Lambda^{(0)}$ is smaller than the threshold after replacing the battery cell # 7, the configuration and/or set of the N battery cells as shown in the middle column of fig. 7 does not satisfy the threshold when iterating or repeating the calculation of the A-value. When iterating and/or repeating, the second battery cell (cell # 2) has the highest voltage drop, i.e. $VD_2 = VD^{(1)}_{max} = 1.834$ [mV]. When the extreme battery cell is determined as the battery cell having the highest voltage drop, cell # 2 is chosen as extreme battery cell. As summary statistic of the N-1 = 7 battery cells except the extreme battery cell, i.e. of cells #1 and cells # 3 - 6, 7* and 8, the mean is calculated as $M^{(1)} = \mu = 1.465$ mV (as indicated by the brackets). The A-value is calculated as $A^{(1)} = |VD^{(1)}_{max} - M^{(1)}| = 0.369$ mV. Thus, the A-value is larger than the threshold, $A^{(1)} > A_T$. Hence, it may be provided to iterate and/or repeat the steps of determining an extreme battery cell, calculating a summary statistic, and possibly replacing the extreme battery cell.

As the A-value $A^{(1)}$ is larger than the threshold, the extreme battery cell (cell #2) is removed from the N battery cells and an alternative battery cell (cell # 2*) is added, cf. the right column. In other words, the extreme battery cell, cell # 2 (middle column), is replaced by the alternative battery cell, cell # 2* (right column). The alternative battery cell is chosen such that a second A-value $\Lambda^{(1)}$ as calculated from the summary statistic M and the voltage drop of the alternative battery cell is smaller than the threshold. The alternative battery call to be added can be chosen and/or selected such that its voltage drop VD is within a preset range r of the summary statistic, here the mean of the not replaced remaining N-1 battery cells. For instance, here the voltage drop of the alternative battery cell # 2* is $VD_{2*} = 1.583$ mV. Thus, the second A-value is $\Lambda^{(1)} = |VD_{7*} - M^{(1)}| = 0.022$ mV, which is smaller than the threshold.

After replacement, cell # 2* has the highest voltage drop, i.e. $VD_{2*} = VD_{max} = 1.583$ [mV], and cell # 6 has the lowest voltage drop, i.e. $VD_6 = VD_{min} = 1.419$ [mV]. Now, the summary statistic (here e.g. the mean) as calculated for the N-1 battery cells except the battery cell having the highest voltage drop, i.e. here except cell # 2*, is $M^{(2,max)} = 1.465$ mV. Thus, the corresponding A-value is $A^{(2,max)} = VD^{(2)}_{max} - M^{(2,max)} = 0.118$ mV which is smaller than the threshold. Similarly, the summary statistic (here e.g. the mean) as calculated for the N-1 battery cells except the battery cell having the lowest voltage drop, i.e. here except cell # 6, is $M^{(2,min)} = 1.488$ mV. Thus, the corresponding A-value is $A^{(2,min)} = |VD^{(2)}_{min} - M^{(2,min)}| = 0.069$ mV which is smaller than the threshold.

In the example of fig. 6, the battery cells 110 as initially selected may be thought of as comprising two outliers, where a first outlier may be identified as cell # 2 and a second group outlier may be identified as cell # 7 (left column).

Thus, in the present example of fig. 7, repeating and/or iterating once lead to an A-value as calculated from the summary statistic and the voltage drop of the extreme battery cell that is below the threshold, irrespective of whether the extreme battery cell is chosen as cell with highest or lowest voltage drop.

The examples as shown in fig. 3 to 7 are only exemplary. For instance, other numbers N are possible. For instance, other values of the threshold $A_T$ may be chosen.

It may be provided that two or more, or all, outliers have voltage drops larger than a "characteristic" voltage drop of the other battery cells. It may be provided that two or more, or all, outliers have voltage drops smaller than a "characteristic" voltage drop of the other battery cells.

It may be provided that when iterating or repeating, the extreme battery cell may be always chosen to be the cell with largest voltage drop. It may be provided that when iterating or repeating, the extreme battery cell may be always chosen to be the cell with smallest voltage drop.

It may be provided that when iterating or repeating, the extreme battery cell may be alternatingly chosen to be the cell with largest voltage drop or lowest voltage drop. It may be provided that when iterating or repeating, the extreme battery cell may be randomly chosen to be the cell with largest voltage drop or lowest voltage drop. It may be provided that when iterating or repeating, the extreme battery cell may be chosen to be the cell with largest voltage drop or lowest voltage drop based on a predetermined scheme.

It may be provided that when iterating or repeating, the extreme battery cell may be chosen to be the cell with highest voltage drop when the A-value as determined from the cell with highest voltage drop and the summary statistic based on the remaining cells but the one with highest voltage drop is larger than the A-value as determined from the cell with lowest voltage drop and the summary statistic based on the remaining cells but the one with lowest voltage drop. It may be provided that when iterating or repeating, the extreme battery cell may be chosen to be the cell with lowest voltage drop when the A-value as determined from the cell with lowest voltage drop and the summary statistic based on the remaining cells but the one with lowest voltage drop is larger than the A-value as determined from the cell with highest voltage drop and the summary statistic based on the remaining cells but the one with highest voltage drop.

Other methods for choosing the battery cell with largest voltage drop or lowest voltage drop are possible, and/or for choosing the extreme battery cell.

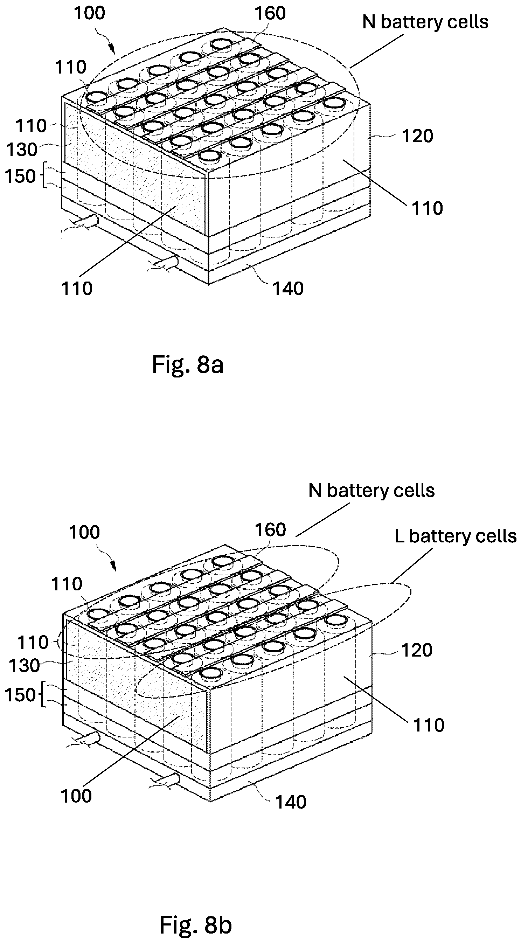

Fig. 8a and 8b show battery modules 100. The battery modules 100 have been assembled such that they have battery cells 110 as selected by a method according to the invention.

The battery modules 100 may comprise a frame 120. In the frame 120, a filling 130 may be arranged and/or accommodated. The battery cells 110 may be contacted and/or surrounded by the filling 130. The battery module 100 may have a cooling unit 140 for cooling battery cells 110. The cooling unit 140 may be or comprise a heat sink. The battery module 100 may have a cell holder 150 for holding and/or securing battery cells 110. The battery module 100 may have one or more busbars 160 for electrically contacting battery cells 110.

The battery cells 110 may be or comprise prismatic cells. The battery cells 110 may be or comprise cylindrical cells. The battery cells 110 may be or comprise pouch cells. However, the battery module 100 is not necessarily limited to a specific type of battery cell 110. The battery cells 110 may comprise lithium, and/or another suitable material.

A battery pack may be assembled from battery modules 100. Battery packs (and correspondingly battery modules 100) may be used e.g. in electronic vehicles (EV), electronic devices, consumer electronics, power tools, energy storage, and the like.

The battery modules 100 may comprise an integer number S of battery cells 110. The integer number S may be equal to the integer number N (cf. e.g. fig. 8a), such that all battery cells 110 of the battery module 100 may be selected by a method according to the invention.

Alternatively, the integer number S may be larger than the integer number N (cf. e.g. fig. 8b), such that a number N of battery cells 110 of the battery module 100 may be selected by a method according to the invention. It may be provided that a first number N of battery cells 110 of the battery module 100 may be selected by carrying out a method according to the invention, and a second number L of battery cells 110 of the battery module 100 may be selected by carrying out a method according to the invention. For instance, a first group of battery cells 100 including a number N of battery cells may be selected by a specific method according to the invention, and a second group of battery cells 100 including a number L of battery cells may be selected by a different specific method according to the invention. The respective methods may differ e.g. in one or more of second integer number, way of determining the extreme battery cell, summary statistic M, calculation of A-value A, threshold $A_T$, calculation of second A-value A, and/or another aspect.

It may be provided that a first number N of battery cells 110 of the battery module 100 may be selected by carrying out a method according to the invention, and a second number L of battery cells 110 of the battery module 100 may be selected in a different way or by a different method.

It may be provided that the number of battery cells S of the battery module 100 is equal to the sum of N and L (cf. e.g. fig. 8b). Alternatively, the number of battery cells S of the battery module 100 may be larger than the sum of N and L.

The difference of the voltage drops between any two of the N battery cells 110 of the battery module 100 may be in a preset range. It may be provided that the preset range may be or comprise a percentage. The percentage may be e.g. 0.1 to 10 percent, or 0.1 to 5 percent, or 0.1 to 2 percent. The percentage and/or the preset range may be defined as the absolute value of the difference of the voltage drop any two battery cells 110 divided by the voltage drop of one of the any two battery cells 110.

Alternatively or additionally, the preset range may be or comprise a value, such as e.g. a value of 0.5 mV or less, or 0.3 mV or less, or 0.1 mV or less. The difference in voltage drop, and/or the absolute value of the difference in voltage drop, between any two battery cells 110 of the battery module 100 may be smaller than the value of the preset range.

The battery module 100 may have an mV/day Delta of 0.5 or less. The battery module 100 may have an mV/day Delta of 0.3 or less. The battery module 100 may have an mV/day Delta of 0.1 or less.

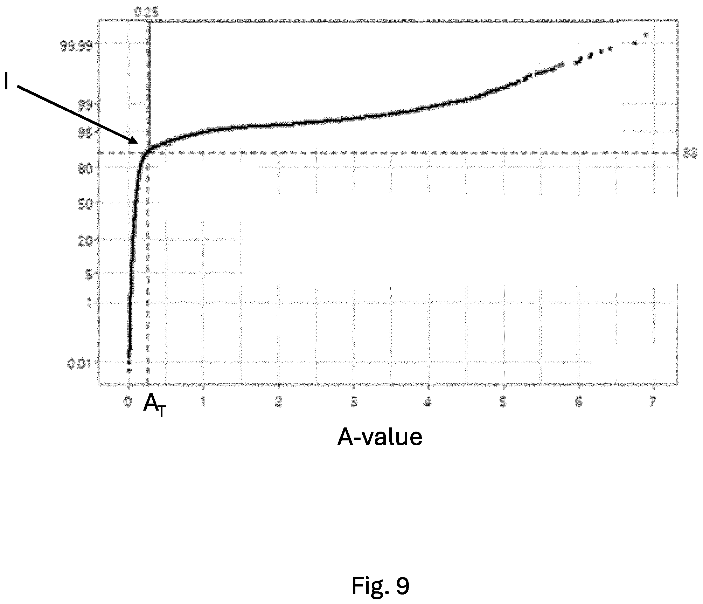

In fig. 9, a cumulative distribution function of the A-value of battery modules 100 is shown. The cumulative distribution function indicates the probability that the A-value of a battery module 100 is lower than or equal to a specific A-value as given by the abscissa (the horizontal axis). The A-value of the cumulative distribution function, and/or of a battery module 100, may be determined as the difference between the highest voltage drop of a battery cell 110 in the battery module 100, and the mean of the voltage drop of the other battery cells 110 except the one with the highest voltage drop of the battery module 100.

For instance, in fig. 9 the probability that a battery module 100 has an A-value of 0.25 or less is 88 %. The cumulative distribution function of fig. 9 is an empirical cumulative distribution function, based on the A-value of 16048 battery modules. The shape and/or values of the distribution function of fig. 9 is only exemplary, and other shapes and/or values may be possible.

The probability of a no-good battery module may be related to the A-value of the battery module 100, such as e.g. the difference between the highest voltage drop of a battery cell 110 in the battery module 100, and the mean of the voltage drop of the other battery cells 110 except the one with the highest voltage drop of the battery module 100. For instance, in fig. 9, out of the battery modules 100 having A-values of 0.25 or higher, 60 % were identified as no-good battery modules. The lower the A-value of a battery module 100, the lower may be the probability that said battery module 100 is a no-good battery module. The lower the A-value of a battery module 100, the lower may be the mV/day Delta of the battery module 100.

From the cumulative distribution function, the threshold $A_T$ may be determined, specified, selected, and/or chosen. The threshold $A_T$ may be determined, defined and/or selected such that a battery module 100 may have a specific probability that said battery module is a no-good battery module, and/or that the mV/day Delta of the battery module 100 may be lower.

It may be provided that the threshold $A_T$ may be determined, defined and/or selected based on an inflection point I of the cumulative distribution function. In the example of fig. 9, an inflection point I is at an A-value of 0.25 (with cumulative probability of 88%), such that e.g. $A_T = 0.25$.

The invention may be characterized by features as disclosed in the claims, the specifications and the figures, in any combination and/or selection thereof.

| | |
|---|---|
| 100 | battery module |
| 110 | battery cell |
| 120 | frame |
| 130 | filling material |
| 140 | cooling unit |
| 150 | cell holder |

| | |
|---|---|
| K | first integer quantity of battery cells |
| N | second integer quantity of battery cells |
| L | integer number of battery cells |

| | |
|---|---|
| VD | voltage drop |
| M | summary statistic |
| A | A-value |
| $\Lambda$ | second A-value |

| | |
|---|---|
| $A_T$ | preset threshold |
| I | inflection point |

| | |
|---|---|
| $\mu$ | mean |
| $\sigma$ | standard deviation |
| d | average absolute deviation |
| r | preset range |

**Claims**

1. A battery module assembly method, comprising:

   providing K battery cells (110), K being a first integer;
   calculating a respective voltage drop (VD) of the K battery cells (110) due to a respective self-discharge of each of the K battery cells (110);
   selecting N battery cells (110) from the K battery cells (110), N being a second integer smaller than the first integer K;
   determining an extreme battery cell from the N battery cells (110) that exhibits a maximum voltage drop from the voltage drops (VD), or that exhibits a minimum voltage drop from the voltage drops (VD);
   calculating a summary statistic (M) as function of the voltage drops of the N battery cells (110) except for the extreme battery cell;
   calculating an A-value (A) of the N battery cells as function of the calculated summary statistic (M) and the voltage drop (VD) of the extreme battery cell; and
   if the A-value (A) is larger than a preset threshold ($A_T$), removing the extreme battery cell from the N battery cells (110) and adding an alternative battery cell from the K battery cells (110) such that the N battery cells comprise the alternative battery cell and the N battery cells except for the extreme battery cell, wherein a second A-value ($\Lambda$) as calculated as function of the summary statistic (M) and the voltage drop (VD) of the alternative battery cell is smaller than the preset threshold ($A_T$).

2. The battery module assembly method of claim 1, wherein before or when calculating the respective voltage drop (VD) of the K battery cells (110), the method further comprises the steps:

   determining a respective initial cell voltage of each of the K battery cells (110); and
   determining a respective final cell voltage of each of the K battery cells (110), wherein preferably the final cell voltage of each of the K battery cells (110) is determined after a respective storage duration.

3. The battery module assembly method of claim 1 or 2, wherein the summary statistic (M) is or comprises a mean ($\mu$) of the voltage drops (VD) of the N battery cells (110) except for the extreme battery cell.

4. The battery module assembly method of any one of the preceding claims, wherein

when calculating the A-value (A) of the N battery cells (110) as function of the calculated summary statistic (M) and the voltage drop (VD) of the extreme battery cell, the A-value (A) is calculated as a difference between the maximum voltage drop of the N battery cells (110) and the mean ($\mu$) of the voltage drops (VD) of the N battery cells (110) except for the extreme battery cell; or

when calculating the A-value (A) of the N battery cells as function of the calculated summary statistic (M) and the voltage drop (VD) of the extreme battery cell, the A-value (A) is calculated as a difference between the mean ($\mu$) of the voltage drops of the N battery cells (110) except for the extreme battery cell and the minimum voltage drop (VD) of the N battery cells (110).

5. The battery module assembly method of any one of the preceding claims, wherein, when removing the extreme battery cell from the N battery cells (110) and adding the alternative battery cell from the K battery cells (110) to the N battery cells (110), the voltage drop (VD) of the alternative battery cell lies within a preset range (r) from the mean ($\mu$) of the voltage drops (VD) of the N battery cells (110) except for the extreme battery cell.

6. The battery module assembly method of claim 5, wherein the preset range (r) is 0.1 to 10 percent, or 0.1 to 5 percent, or 0.1 to 2 percent.

7. The battery module assembly method according to any one of the preceding claims, wherein the summary statistic (M) comprises a mean ($\mu$) and a standard deviation ($\sigma$) of the voltage drops of the N battery cells except for the extreme battery cell, and the A-value (A) is calculated as a function of the mean ($\mu$), the standard deviation ($\sigma$) and the voltage drop (VD) of the extreme battery cell, preferably as the difference of the maximum voltage drop minus the mean ($\mu$) and the standard deviation ($\sigma$), or preferably as the sum of the mean ($\mu$) and the standard deviation ($\sigma$) minus the minimum voltage drop.

8. The battery module assembly method according to any one of the preceding claims, further comprising the steps:

if and after removing the extreme battery cell from the N battery cells (110) and adding an alternative battery cell from the K battery cells (110), repeating, for the N battery cells (110) including the added alternative battery cell, the steps of:

determining an extreme battery cell;
calculating a summary statistic (M) as function of the voltage drops (VD) of the N battery cells except for the extreme battery cell; and
calculating an A-value (A);

and the method further comprising:
if the A-value (A) is larger than the preset threshold ($A_T$), removing the extreme battery cell from the N battery cells (110) and adding another alternative battery cell from the K battery cells (110) to the N battery cells (110) such that the N battery cells comprise the another alternative battery cell and the N battery cells except for the extreme battery cell, wherein a second A-value ($\wedge$) as calculated as function of the summary statistic (M) and the voltage drop (VD) of the another alternative battery cell is smaller than the preset threshold ($A_T$).

9. The battery module assembly method of claim 8, wherein the steps are repeated and the extreme battery is replaced until the A-value (A) is smaller than the preset threshold ($A_T$) and/or a specified number or repetitions is reached.

10. The battery module assembly method of any one of the preceding claims, further comprising:

providing a relationship between a probability of no-good battery modules and the A-value (A), wherein the preset threshold ($A_T$) is determined so as to correspond to a target probability of no-good battery modules.

11. The battery module assembly method of claim 10, wherein the relationship between the probability of no-good battery modules and the A-value (A) is a cumulative distribution function, wherein preferably the target probability is chosen at an inflection point (I) of the cumulative distribution function.

12. The battery module assembly method of any of the preceding claims, further comprising:
assembling the N battery cells (110) except for the extreme battery cell, and the alternative battery cell to a battery module (100).

13. A battery module (100), the battery module (100) being assembled according to the battery module assembly method of any one of the preceding claims.

14. The battery module (100) of claim 13, having a mV/day Delta of 0.5 or less, preferably of 0.3 or less.

15. The battery module (100) of claim 13 or 14, the battery module comprising a number of N battery cells (110), N being an integer number larger than or equal to two, wherein the difference of the voltage drops (VD) between any two of the N battery cells (110) is in a preset range.

providing K battery cells

determining an initial cell voltage of each of the K battery cells

determining a final cell voltage of each of the K battery cells

calculating a voltage drop of the K battery cells

selecting N battery cells of the K battery cells

determining an exterme battery cell form the N battery cells

calculating a measure of the N battery cells except the extreme battery cell

calculating an A-value

If the A-vaule is larger than a preset threshold, removing the extreme battery cell from the N battery cells and adding an alternative battery cell

Fig. 1

Fig. 2

| Cell # | Voltage drop [mV] | | Cell # | Voltage drop [mV] | | Cell # | Voltage drop [mV] |
|---|---|---|---|---|---|---|---|
| 1 | 1.887 | $VD_{max} = 1.887$ | | | | 1* | 1.601 |
| 2 | 1.634 | | 2 | 1.634 | | 2 | 1.634 |
| 3 | 1.465 | | 3 | 1.465 | | 3 | 1.465 |
| 4 | 1.553 | | 4 | 1.553 | | 4 | 1.553 |
| 5 | 1.63 | | 5 | 1.63 | | 5 | 1.63 |
| 6 | 1.619 | remove extreme battery cell | 6 | 1.619 | add alternative battery cell | 6 | 1.619 |
| 7 | 1.599 | | 7 | 1.599 | | 7 | 1.599 |
| 8 | 1.557 | | 8 | 1.557 | | 8 | 1.557 |
| 9 | 1.596 | $M = 1.585$ | 9 | 1.596 | | 9 | 1.596 |
| 10 | 1.563 | | 10 | 1.563 | | 10 | 1.563 |
| 11 | 1.547 | | 11 | 1.547 | | 11 | 1.547 |
| 12 | 1.584 | | 12 | 1.584 | | 12 | 1.584 |
| 13 | 1.645 | | 13 | 1.645 | | 13 | 1.645 → $VD^*_{max} = 1.645$ |
| 14 | 1.604 | | 14 | 1.604 | | 14 | 1.604 |
| 15 | 1.623 | | 15 | 1.623 | | 15 | 1.623 |
| 16 | 1.576 | | 16 | 1.576 | | 16 | 1.576 |

$A = VD_{max} - M = 0.302$

$A > A_T$

$\Lambda = VD_{1^*} - M = 0.016$

$\Lambda < A_T$

$M^* = 1.582$

$A^* = VD^*_{max} - M^* = 0.063$

$A^* < A_T$

Fig. 3

EP 4 726 846 A1

| Cell # | Voltage drop [mV] |
|--------|-------------------|
| 1 | 1.308 |
| 2 | 1.634 |
| 3 | 1.465 |
| 4 | 1.553 |
| 5 | 1.63 |
| 6 | 1.619 |
| 7 | 1.599 |
| 8 | 1.557 |
| 9 | 1.596 |
| 10 | 1.563 |
| 11 | 1.547 |
| 12 | 1.584 |
| 13 | 1.645 |
| 14 | 1.604 |
| 15 | 1.623 |
| 16 | 1.576 |

$VD_{min} = 1.308$

$M = 1.585$

$A = M - VD_{min} = 0.277$

$A > A_T$

remove extreme battery cell →

| Cell # | Voltage drop [mV] |
|--------|-------------------|
| 2 | 1.634 |
| 3 | 1.465 |
| 4 | 1.553 |
| 5 | 1.63 |
| 6 | 1.619 |
| 7 | 1.599 |
| 8 | 1.557 |
| 9 | 1.596 |
| 10 | 1.563 |
| 11 | 1.547 |
| 12 | 1.584 |
| 13 | 1.645 |
| 14 | 1.604 |
| 15 | 1.623 |
| 16 | 1.576 |

add alternative battery cell →

| Cell # | Voltage drop [mV] |
|--------|-------------------|
| 1* | 1.601 |
| 2 | 1.634 |
| 3 | 1.465 |
| 4 | 1.553 |
| 5 | 1.63 |
| 6 | 1.619 |
| 7 | 1.599 |
| 8 | 1.557 |
| 9 | 1.596 |
| 10 | 1.563 |
| 11 | 1.547 |
| 12 | 1.584 |
| 13 | 1.645 |
| 14 | 1.604 |
| 15 | 1.623 |
| 16 | 1.576 |

$VD^*_{min} = 1.465$

$\Lambda = VD_{1*} - M = 0.016$

$\Lambda < A_T$

$M^* = 1.582$

$A^* = M^* - VD^*_{min} = 0.129$

$A^* < A_T$

Fig. 4

**Table 1:**

| Cell # | Voltage drop [mV] |
|---|---|
| 1 | 1.808 |
| 2 | 1.834 |
| 3 | 1.465 |
| 4 | 1.453 |
| 5 | 1.43 |
| 6 | 1.419 |
| 7 | 1.499 |
| 8 | 1.457 |

$VD^{(0)}_{max} = 1.834$

$M^{(0)} = 1.504$

$A^{(0)} = VD^{(0)}_{max} - M^{(0)} = 0.33$

$A^{(0)} > A_T$

remove extreme battery cell and add alternative battery cell

**Table 2:**

| Cell # | Voltage drop [mV] |
|---|---|
| 1 | 1.808 |
| 2* | 1.401 |
| 3 | 1.465 |
| 4 | 1.453 |
| 5 | 1.43 |
| 6 | 1.419 |
| 7 | 1.499 |
| 8 | 1.457 |

$VD^{(1)}_{max} = 1.808$

$\Lambda^{(0)} = M^{(0)} - VD_{2*} = 0.103$

$\Lambda^{(0)} < A_T$

$M^{(1)} = 1.446$

$A^{(1)} = VD^{(1)}_{max} - M^{(1)} = 0.362$

$A^{(1)} > A_T$

remove extreme battery cell and add alternative battery cell

**Table 3:**

| Cell # | Voltage drop [mV] |
|---|---|
| 1* | 1.452 |
| 2* | 1.401 |
| 3 | 1.465 |
| 4 | 1.453 |
| 5 | 1.43 |
| 6 | 1.419 |
| 7 | 1.499 |
| 8 | 1.457 |

$VD^{(2)}_{max} = 1.499$

$\Lambda^{(1)} = VD_{1*} - M^{(1)} = 0.006$

$\Lambda^{(1)} < A_T$

$M^{(2)} = 1.440$

$A^{(2)} = VD^{(2)}_{max} - M^{(2)} = 0.059$

$A^{(2)} < A_T$

Fig. 5

| Cell # | Voltage drop [mV] |
|---|---|
| 1 | 1.531 |
| 2 | 1.834 |
| 3 | 1.465 |
| 4 | 1.453 |
| 5 | 1.43 |
| 6 | 1.419 |
| 7 | 1.202 |
| 8 | 1.457 |

$VD^{(0)}_{max} = 1.834$

$M^{(0)} = 1.422$

$A^{(0)} = VD^{(0)}_{max} - M^{(0)} = 0.412$

$A^{(0)} > A_T$

remove extreme battery cell and add alternative battery cell →

| Cell # | Voltage drop [mV] |
|---|---|
| 1 | 1.531 |
| 2* | 1.583 |
| 3 | 1.465 |
| 4 | 1.453 |
| 5 | 1.43 |
| 6 | 1.419 |
| 7 | 1.202 |
| 8 | 1.457 |

$VD^{(1)}_{min} = 1.202$

$\Lambda^{(0)} = M^{(0)} - VD_{2*} = 0.103$

$\Lambda^{(0)} < A_T$

$M^{(1)} = 1.477$

$A^{(1)} = M^{(1)} - VD^{(1)}_{min} = 0.275$

$A^{(1)} > A_T$

remove extreme battery cell and add alternative battery cell →

| Cell # | Voltage drop [mV] |
|---|---|
| 1 | 1.531 |
| 2* | 1.583 |
| 3 | 1.465 |
| 4 | 1.453 |
| 5 | 1.43 |
| 6 | 1.419 |
| 7* | 1.499 |
| 8 | 1.457 |

$VD^{(2)}_{max} = 1.583$

$VD^{(2)}_{min} = 1.419$

$\Lambda^{(1)} = VD_{7*} - M^{(1)} = 0.022$

$\Lambda^{(1)} < A_T$

$M^{(2,max)} = 1.465$

$A^{(2,max)} = VD^{(2)}_{max} - M^{(2,max)} = 0.118 < A_T$

$M^{(2,min)} = 1.488$

$A^{(2,min)} = M^{(2,min)} - VD^{(2)}_{min} = 0.069 < A_T$

Fig. 6

| Cell # | Voltage drop [mV] |
|--------|-------------------|
| 1 | 1.531 |
| 2 | 1.834 |
| 3 | 1.465 |
| 4 | 1.453 |
| 5 | 1.43 |
| 6 | 1.419 |
| 7 | 1.202 → $VD^{(0)}_{min} = 1.202$ |
| 8 | 1.457 |

remove extreme battery cell and add alternative battery cell →

$M^{(0)} = 1.513$

$A^{(0)} = M^{(0)} - VD^{(0)}_{max} - M^{(0)} = 0.311$

$A^{(0)} > A_T$

| Cell # | Voltage drop [mV] |
|--------|-------------------|
| 1 | 1.531 |
| 2 | 1.834 → $VD^{(1)}_{max} = 1.834$ |
| 3 | 1.465 |
| 4 | 1.453 |
| 5 | 1.43 |
| 6 | 1.419 |
| 7* | 1.499 |
| 8 | 1.457 |

remove extreme battery cell and add alternative battery cell →

$\Lambda^{(0)} = M^{(0)} - VD_{7*} = 0.014$

$\Lambda^{(0)} < A_T$

$M^{(1)} = 1.465$

$A^{(1)} = VD^{(1)}_{max} - M^{(1)} = 0.369$

$A^{(1)} > A_T$

| Cell # | Voltage drop [mV] |
|--------|-------------------|
| 1 | 1.531 |
| 2* | 1.583 → $VD^{(2)}_{max} = 1.583$ |
| 3 | 1.465 |
| 4 | 1.453 |
| 5 | 1.43 |
| 6 | 1.419 → $VD^{(2)}_{min} = 1.419$ |
| 7* | 1.499 |
| 8 | 1.457 |

$\Lambda^{(1)} = VD_{2*} - M^{(1)} = 0.118$

$\Lambda^{()} < A_T$

$M^{(2,max)} = 1.465$

$A^{(2,max)} = VD^{(2)}_{max} - M^{(2,max)} = 0.118 < A_T$

$M^{(2,min)} = 1.488$

$A^{(2,min)} = M^{(2,min)} - VD^{(2)}_{min} = 0.069 < A_T$

Fig. 7

Fig. 8a

Fig. 8b

Fig. 9

## DOCUMENTS CONSIDERED TO BE RELEVANT

| Category | Citation of document with indication, where appropriate, of relevant passages | Relevant to claim | CLASSIFICATION OF THE APPLICATION (IPC) |
| --- | --- | --- | --- |
| X | US 2022/140617 A1 (WANG YUE-YUN [US] ET AL) 5 May 2022 (2022-05-05) * paragraphs [0004], [0005], [0010], [0015], [0040] - [0058]; figures 3-6 * ----- | 1-15 | INV. H01M10/42 B60L58/18 G01R19/165 G01R31/396 |

TECHNICAL FIELDS
SEARCHED (IPC)

H01M
G01R
B60L

The present search report has been drawn up for all claims

| Place of search | Date of completion of the search | Examiner |
| --- | --- | --- |
| The Hague | 25 March 2025 | Fagundes-Peters, D |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

.................................................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 20 5864

This annex lists the patent family members relating to the patent documents cited in the above-mentioned European search report.
The members are as contained in the European Patent Office EDP file on
The European Patent Office is in no way liable for these particulars which are merely given for the purpose of information.

25-03-2025

| Patent document cited in search report | Publication date | Patent family member(s) | Publication date |
|---|---|---|---|
| US 2022140617 A1 | 05-05-2022 | CN 114441979 A | 06-05-2022 |
| | | DE 102021110152 A1 | 05-05-2022 |
| | | US 2022140617 A1 | 05-05-2022 |

EPO FORM P0459

For more details about this annex : see Official Journal of the European Patent Office, No. 12/82